# EUROPEAN PATENT APPLICATION

(11) **EP 4 456 455 A1**
(43) Date of publication of application: **30.10.2024**
(21) Application number: 23742818.0
(22) Date of filing: 13.01.2023
(51) Int. Cl.: H04B 17/309

(54) **CHANNEL CHARACTERISTIC ACQUISITION METHOD AND RELATED APPARATUS**

(30) Priority: 24.01.2022 CN 202210081649
(71) Applicant: Huawei Technologies Co., Ltd., Shenzhen, Guangdong 518129 (CN)
(72) Inventor: HE, Gaoning, Shenzhen, Guangdong 518129 (CN); YANG, Ganghua, Shenzhen, Guangdong 518129 (CN)
(74) Representative: Isarpatent
(86) International application number: PCT/CN2023/072084
(87) International publication number: WO 2023/138503

(57) **Abstract**

Embodiments of this application disclose a channel characteristic obtaining method and a related apparatus. The method includes: A first communication apparatus sends a first reference signal and a first notification message to a second communication apparatus; and the first communication apparatus receives channel characteristic information of a first channel type from the second communication apparatus. The first channel type is a channel type corresponding to first channel state information CSI determined by the second communication apparatus based on the first reference signal, the first notification message is used to request the channel characteristic information of the first channel type, a channel characteristic of the first channel type is from a channel characteristic library, and the channel characteristic library includes channel characteristics of one or more channel types. In this way, the first communication apparatus obtains the channel characteristic of the first channel type based on the channel characteristic information of the first channel type. This helps the first communication apparatus perform channel reconstruction, estimation, or the like based on the channel characteristic of the first channel type, to improve performance of communication between the first communication apparatus and the second communication apparatus.

## Description

This application claims priority to Chinese Patent Application No. 202210081649.5, filed with the China National Intellectual Property Administration on January 24, 2022, and entitled "CHANNEL CHARACTERISTIC OBTAINING METHOD AND RELATED APPARATUS", which is incorporated herein by reference in its entirety.

### TECHNICAL FIELD

This application relates to the field of communication technologies, and in particular, to a channel characteristic obtaining method and a related apparatus.

### BACKGROUND

In a communication system, communication transmission is performed between a terminal device and a network device through a channel. In addition, a channel state of the channel directly affects transmission efficiency and communication quality between the terminal device and the network device, which greatly affects communication transmission performance. Therefore, the terminal device may obtain a channel characteristic of the channel. The terminal device performs corresponding processing on the channel based on the channel characteristic of the channel, and then performs communication transmission with the network device, to improve communication performance.

Therefore, it is worth considering how the terminal device obtains the channel characteristic of the channel to improve the communication performance.

### SUMMARY

This application provides a channel characteristic obtaining method and a related apparatus, to improve communication performance.

A first aspect of this application provides a channel characteristic obtaining method. The method includes:
A first communication apparatus generates a first reference signal and a first notification message; the first communication apparatus sends the first reference signal and the first notification message to a second communication apparatus; and the first communication apparatus receives channel characteristic information of a first channel type from the second communication apparatus, where the first channel type is a channel type corresponding to first channel state information (channel state information, CSI) determined by the second communication apparatus based on the first reference signal, the first notification message is used to request the channel characteristic information of the first channel type, a channel characteristic of the first channel type is from a channel characteristic library, and the channel characteristic library includes channel characteristics of one or more channel types.

In the foregoing technical solution, the first communication apparatus may request the channel characteristic information of the first channel type from the second communication apparatus based on the first notification message. Then, the first communication apparatus receives the channel characteristic information of the first channel type from the second communication apparatus. The channel characteristic of the first channel type is from the channel characteristic library, and the channel characteristic library includes the channel characteristics of the one or more channel types. Therefore, the first communication apparatus may obtain the channel characteristic of the first channel type based on the channel characteristic information of the first channel type, so that the first communication apparatus performs corresponding channel processing based on the channel characteristic of the first channel type, to improve communication performance. For example, the first communication apparatus may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus may further improve precision of channel estimation based on the channel characteristic of the first channel type, to improve communication performance.

In a possible implementation, the channel characteristic information of the first channel type includes the channel characteristic of the first channel type; or the channel characteristic information of the first channel type includes an index of the first channel type; or the channel characteristic information of the first channel type includes a channel key of the first channel type.

In this implementation, content specifically included in the channel characteristic information of the first channel type is provided. This facilitates implementation of the solution. For example, the channel characteristic information of the first channel type may directly include the channel characteristic of the first channel type. In other words, the second communication apparatus may provide the channel characteristic of the first channel type in the channel characteristic library for the first communication apparatus. Alternatively, the channel characteristic information of the first channel type includes the index or the channel key of the first channel type. In this way, the first communication apparatus may search the channel characteristic library for the index or the channel key of the first channel type, to obtain the channel characteristic of the first channel type. Therefore, the first communication apparatus may obtain the channel characteristic of the first channel type based on the channel characteristic information of the first channel type, so that the first communication apparatus performs corresponding channel processing based on the channel characteristic of the first channel type, to improve communication performance.

In another possible implementation, the channel characteristic information of the first channel type includes the index or the channel key of the first channel type, and the method further includes:
The first communication apparatus obtains the channel characteristic of the first channel type from the channel characteristic library based on the index or the channel key of the first channel type.

In this implementation, the channel characteristic information of the first channel type includes the index or the channel key of the first channel type. The first communication apparatus may search the channel characteristic library for the channel characteristic of the first channel type based on the index or the channel key of the first channel type. In this way, the first communication apparatus obtains the channel characteristic of the first channel type at low overheads.

In another possible implementation, the method further includes:
The first communication apparatus sends a download request to the second communication apparatus, where the download request is used to request to download the channel characteristic library; the first communication apparatus receives a first download address from the second communication apparatus; and the first communication apparatus downloads the channel characteristic library from the first download address.

In this implementation, the first communication apparatus needs to first download the channel characteristic library. The foregoing implementation provides a possible implementation in which the first communication apparatus downloads the channel characteristic library. This facilitates implementation of the solution. In addition, this facilitates the first communication apparatus to quickly query the channel characteristic, so that the channel characteristic is obtained at low overheads, and resource overheads are reduced.

In another possible implementation, the method further includes:
The first communication apparatus sends to the second communication apparatus, a first request, and a version number of the channel characteristic library stored in the first communication apparatus, where the first request is used to request a latest version of a channel characteristic library; and
if the channel characteristic library stored in the first communication apparatus is not the latest version of the channel characteristic library, the first communication apparatus receives a second download address sent by the second communication apparatus, and downloads the latest version of the channel characteristic library from the second download address; or
if the channel characteristic library stored in the first communication apparatus is the latest version of the channel characteristic library, the first communication apparatus receives first indication information from the second communication apparatus, where the first indication information indicates that the channel characteristic library stored in the first communication apparatus is the latest version of the channel characteristic library.

In this implementation, the first communication apparatus may request the latest version of the channel characteristic library from the second communication apparatus, so that the first communication apparatus obtains the accurate channel characteristic, to improve communication performance. In the foregoing implementation, the first communication apparatus may provide, to the second communication apparatus, the version number of the channel characteristic library locally stored in the first communication apparatus, so that the second communication apparatus determines that the channel characteristic library obtained by the first communication apparatus is the latest version of the channel characteristic library. In this way, the first communication apparatus obtains the latest version of the channel characteristic library.

In another possible implementation, the method further includes:
The first communication apparatus adjusts, based on the channel characteristic of the first channel type, at least one of the following parameters of the first reference signal: a sending density, a sending periodicity, a sending resource, and sending power.

In this implementation, the first communication apparatus combines some sending parameters of the channel characteristic of the first channel type, to help improve signal quality corresponding to the first channel state information corresponding to the first reference signal. For example, the first communication apparatus may select a subcarrier with better channel quality to send the first reference signal; or the first communication apparatus increases the sending density of the first reference signal; or the first communication apparatus increases the sending power of the first reference signal.

In another possible implementation, the method further includes:
The first communication apparatus performs channel reconstruction or channel estimation based on the channel characteristic of the first channel type.

In this implementation, the first communication apparatus performs channel reconstruction or estimation based on the channel characteristic of the first channel type. Then, the first communication apparatus performs uplink precoding based on a reconstructed channel or an estimated channel. In this way, uplink transmission efficiency of a terminal device is improved, and communication transmission performance is improved.

In another possible implementation, the channel characteristic of the first channel type includes at least one of the following: a quantity of a plurality of paths, and an azimuth angle, a zenith angle, a delay, and a Doppler shift that correspond to each of the plurality of paths.

In this implementation, some possible channel characteristics included in the channel characteristic of the first channel type are provided. This facilitates implementation of the solution. In addition, the channel characteristic illustrated above is mainly related to an environment in which the first communication apparatus is located, and the channel characteristic is relatively fixed. Therefore, the solution in which the first communication apparatus obtains the channel characteristic of the first channel type from the channel characteristic library is highly feasible. In other words, the channel characteristics obtained by the first communication apparatus can reflect, to some extent, channel characteristics of a channel of the first communication apparatus. This helps the first communication apparatus perform channel estimation and the like based on the channel characteristics, to improve communication performance. In addition, the first communication apparatus may quickly obtain the channel characteristic by using the technical solution of this application, so that the first communication apparatus obtains the channel characteristic at low overheads.

A second aspect of this application provides a channel characteristic obtaining method. The method includes:
A second communication apparatus receives a first reference signal and a first notification message from a first communication apparatus; the second communication apparatus determines first channel state information based on the first notification message and the first reference signal; the second communication apparatus determines channel characteristic information of a first channel type corresponding to the first channel state information; and the second communication apparatus sends the channel characteristic information of the first channel type to the first communication apparatus, where the first notification message is used to request the channel characteristic information of the first channel type, a channel characteristic of the first channel type is from a channel characteristic library, and the channel characteristic library includes channel characteristics of one or more channel types.

In the foregoing technical solution, the second communication apparatus sends the channel characteristic information of the first channel type to the first communication apparatus. The first notification message is used to request the channel characteristic information of the first channel type, the channel characteristic of the first channel type is from the channel characteristic library, and the channel characteristic library includes the channel characteristics of the one or more channel types. Therefore, the second communication apparatus may provide the channel characteristic information of the first channel type for the first communication apparatus. The first communication apparatus may obtain the channel characteristic of the first channel type based on the channel characteristic information of the first channel type, so that the first communication apparatus performs corresponding channel processing based on the channel characteristic of the first channel type, to improve communication performance. For example, the first communication apparatus may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus may further improve precision of channel estimation based on the channel characteristic of the first channel type, to improve communication performance.

In a possible implementation, the channel characteristic information of the first channel type includes the channel characteristic of the first channel type; or the channel characteristic information of the first channel type includes an index of the first channel type; or the channel characteristic information of the first channel type includes a channel key of the first channel type.

In this implementation, content specifically included in the channel characteristic information of the first channel type is provided. This facilitates implementation of the solution. For example, the channel characteristic information of the first channel type may directly include the channel characteristic of the first channel type. In other words, the second communication apparatus may provide the channel characteristic of the first channel type in the channel characteristic library for the first communication apparatus. Alternatively, the channel characteristic information of the first channel type includes the index or the channel key of the first channel type. In this way, the first communication apparatus may search the channel characteristic library for the index or the channel key of the first channel type, to obtain the channel characteristic of the first channel type. Therefore, the first communication apparatus may obtain the channel characteristic of the first channel type based on the channel characteristic information of the first channel type, so that the first communication apparatus performs corresponding channel processing based on the channel characteristic of the first channel type, to improve communication performance.

In another possible implementation, the channel characteristic information of the first channel type includes the channel characteristic of the first channel type, and that the second communication apparatus determines channel characteristic information of a first channel type corresponding to the channel state information includes:
The second communication apparatus determines, based on a first correspondence, the index or the channel key of the first channel type corresponding to the channel state information, where the first correspondence is a correspondence between channel state information and an index or a channel key of a channel type; and the second communication apparatus obtains the channel characteristic of the first channel type from the channel characteristic library based on the index or the channel key of the first channel type.

This implementation illustrates a process in which the second communication apparatus obtains the channel characteristic of the first channel type from the channel characteristic library. The second communication apparatus first determines the index or the channel key of the first channel type, and then obtains the channel characteristic of the first channel type from the channel characteristic library based on the index or the channel key of the first channel type.

In another possible implementation, the method further includes:
The second communication apparatus receives a download request from the first communication apparatus, where the download request is used to request to download the channel characteristic library; and the second communication apparatus sends a first download address to the first communication apparatus, where the first download address is used to download the channel characteristic library.

In this implementation, a process in which the second communication apparatus provides the channel characteristic library for the first communication apparatus is provided, so that the first communication apparatus downloads the channel characteristic library, and quickly obtains the channel characteristic of the first channel type from the channel characteristic library.

In another possible implementation, the method further includes:
The second communication apparatus receives, from the first communication apparatus, a first request, and a version number of the channel characteristic library stored in the first communication apparatus, where the first request is used to request a latest version of a channel characteristic library;
the second communication apparatus determines whether the version number of the channel characteristic library stored in the first communication apparatus is a version number of the latest version of the signal characteristic library; and
if the version number of the channel characteristic library stored in the first communication apparatus is the version number of the latest version of the channel characteristic library, the second communication apparatus sends first indication information to the first communication apparatus, where the first indication information indicates that the channel characteristic library stored in the first communication apparatus is the latest version of the channel characteristic library; or
if the version number of the channel characteristic library stored in the first communication apparatus is not the version number of the latest version of the channel characteristic library, the second communication apparatus sends a second download address to the first communication apparatus, where the second download address is used to download the latest version of the channel characteristic library.

In this implementation, the first communication apparatus may request the latest version of the channel characteristic library from the second communication apparatus, and the second communication apparatus may provide the latest version of the channel characteristic library for the first communication apparatus. In this way, the first communication apparatus obtains the accurate channel characteristic, to improve communication performance. In the foregoing implementation, the first communication apparatus may provide, to the second communication apparatus, the version number of the channel characteristic library locally stored in the first communication apparatus, so that the second communication apparatus determines that the channel characteristic library obtained by the first communication apparatus is the latest version of the channel characteristic library. In this way, the first communication apparatus obtains the latest version of the channel characteristic library.

In another possible implementation, the method further includes:
The second communication apparatus obtains a plurality of pieces of historical channel state information; and the second communication apparatus establishes the channel characteristic library based on the plurality of pieces of historical channel state information.

In this implementation, the second communication apparatus may establish the channel characteristic library based on the historical channel state information, to quickly provide the channel characteristic for the first communication apparatus.

In another possible implementation, that the second communication apparatus establishes the channel characteristic library based on the plurality of pieces of historical channel state information includes:
The second communication apparatus determines a channel characteristic set corresponding to each of the plurality of pieces of historical channel state information, where the channel characteristic set includes one or more channel characteristics;
the second communication apparatus classifies the plurality of pieces of historical channel state information based on the channel characteristic set corresponding to each piece of historical channel state information, to obtain historical channel state information corresponding to each of a plurality of channel types; and
the second communication apparatus determines, based on the historical channel state information corresponding to each of the plurality of channel types, a channel characteristic corresponding to each of the plurality of channel types.

The foregoing implementation illustrates a process in which the second communication apparatus establishes the channel characteristic library based on the plurality of pieces of historical channel state information. The second communication apparatus may classify the plurality of pieces of historical channel state information based on the channel characteristic set corresponding to each piece of historical channel state information, to obtain the historical channel state information corresponding to each of the plurality of channel types. Then, the second communication apparatus determines the channel characteristic of each channel type based on the historical channel state information corresponding to each channel type. This facilitates the second communication apparatus to quickly provide the channel characteristic for the first communication apparatus, to improve communication performance. In addition, this further helps reduce storage overheads of channel characteristics stored by the second communication apparatus.

In another possible implementation, the channel characteristic set corresponding to each piece of channel state information includes at least one of the following: a quantity of a plurality of paths, and an azimuth angle, a zenith angle, a delay, and a Doppler shift that correspond to each of the plurality of paths.

In this implementation, some possible channel characteristics included in the channel characteristic set corresponding to each piece of channel state information is provided. This facilitates implementation of the solution. In addition, the channel characteristic illustrated above is mainly related to an environment in which the first communication apparatus is located, and the channel characteristic is relatively fixed. Therefore, it is feasible for the first communication apparatus to obtain the channel characteristic of the first channel type from the channel characteristic library. In other words, the channel characteristics obtained by the first communication apparatus can reflect, to some extent, channel characteristics of a channel of the first communication apparatus. This helps the first communication apparatus perform channel estimation and the like based on the channel characteristics, to improve communication performance.

In another possible implementation, the method further includes:
The second communication apparatus receives a second reference signal and a second notification message from a third communication apparatus; the second communication apparatus determines first channel state information based on the second notification message and the second reference signal; the second communication apparatus determines channel characteristic information of a second channel type corresponding to the second channel state information; and the second communication apparatus sends the channel characteristic information of the second channel type to the third communication apparatus, where the second notification message is used to request the channel characteristic information of the second channel type, and a channel characteristic of the second channel type is from the channel characteristic library.

In this implementation, the second communication apparatus sends the channel characteristic information of the second channel type to the third communication apparatus, so that the third communication apparatus obtains the channel characteristic of the second channel type based on the channel characteristic information of the second channel type. In this way, the third communication apparatus performs corresponding channel processing based on the channel characteristic of the second channel type, to improve communication performance. For example, the third communication apparatus may perform channel reconstruction or estimation based on the channel characteristic of the second channel type, and then perform uplink precoding based on a reconstructed channel or an estimated channel, to improve uplink transmission efficiency. Alternatively, for example, the third communication apparatus may further improve precision of channel estimation based on the channel characteristic of the second channel type, to improve communication performance.

In another possible implementation, the method further includes:
The second communication apparatus allocates a reference signal pilot sequence to each of the first communication apparatus and the third communication apparatus based on the channel characteristic of the first channel type and the channel characteristic of the second channel type.

In this implementation, the second communication apparatus may allocate the reference signal pilot sequence to each of the first communication apparatus and the third communication apparatus with reference to the channel characteristic of the first channel type and the channel characteristic of the second channel type. This helps improve reuse of the pilot sequence, and reduce overheads on a time frequency resource when a multi-user pilot is transmitted on a radio air interface. For example, if a channel characteristic in the channel characteristic of the first channel type and the channel characteristic of the second channel type is sparse, the second communication apparatus may allocate a same pilot sequence to the first communication apparatus and the third communication apparatus, so that the pilot sequence is reused, to improve utilization of the time frequency resource.

A third aspect of this application provides a first communication apparatus, including:
a processing module, configured to generate a first reference signal and a first notification message; and
a transceiver module, configured to: send the first reference signal and the first notification message to a second communication apparatus; and receive channel characteristic information of a first channel type from the second communication apparatus.

The first channel type is a channel type corresponding to first channel state information determined by the second communication apparatus based on the first reference signal, the first notification message is used to request the channel characteristic information of the first channel type, a channel characteristic of the first channel type is from a channel characteristic library, and the channel characteristic library includes channel characteristics of one or more channel types.

In a possible implementation, the channel characteristic information of the first channel type includes the channel characteristic of the first channel type; or
the channel characteristic information of the first channel type includes an index of the first channel type; or
the channel characteristic information of the first channel type includes a channel key of the first channel type.

In another possible implementation, the channel characteristic information of the first channel type includes the index or the channel key of the first channel type, and the processing module is further configured to:
obtain the channel characteristic of the first channel type from the channel characteristic library based on the index or the channel key of the first channel type.

In another possible implementation, the transceiver module is further configured to:
send a download request to the second communication apparatus, where the download request is used to request to download the channel characteristic library; and
receive a first download address from the second communication apparatus.

The processing module is further configured to:
download the channel characteristic library from the first download address.

In another possible implementation, the transceiver module is further configured to:
send a first request, and a version number of the channel characteristic library stored in the first communication apparatus to the second communication apparatus, where the first request is used to request a latest version of a channel characteristic library; and if the channel characteristic library stored in the first communication apparatus is not the latest version of the channel characteristic library, receive a second download address sent by the second communication apparatus.

The processing module is configured to download the latest version of the channel characteristic library from the second download address.

The transceiver module is further configured to:
if the channel characteristic library stored in the first communication apparatus is the latest version of the channel characteristic library, receive first indication information from the second communication apparatus, where the first indication information indicates that the channel characteristic library stored in the first communication apparatus is the latest version of the channel characteristic library.

In another possible implementation, the processing module is further configured to:
adjust, based on the channel characteristic of the first channel type, at least one of the following parameters of the first reference signal: a sending density, a sending periodicity, a sending resource, and sending power.

In another possible implementation, the processing module is further configured to:
perform channel reconstruction or channel estimation based on the channel characteristic of the first channel type.

In another possible implementation, the channel characteristic of the first channel type includes at least one of the following: a quantity of a plurality of paths, and an azimuth angle, a zenith angle, a delay, and a Doppler shift that correspond to each of the plurality of paths.

A fourth aspect of this application provides a second communication apparatus, including:
a transceiver module, configured to receive a first reference signal and a first notification message from a first communication apparatus; and
a processing module, configured to: determine first channel state information based on the first notification message and the first reference signal; and determine channel characteristic information of a first channel type corresponding to the first channel state information.

The transceiver module is further configured to send the channel characteristic information of the first channel type to the first communication apparatus.

The first notification message is used to request the channel characteristic information of the first channel type, a channel characteristic of the first channel type is from a channel characteristic library, and the channel characteristic library includes channel characteristics of one or more channel types.

In a possible implementation, the channel characteristic information of the first channel type includes the channel characteristic of the first channel type; or
the channel characteristic information of the first channel type includes an index of the first channel type; or
the channel characteristic information of the first channel type includes a channel key of the first channel type.

In another possible implementation, the channel characteristic information of the first channel type includes the channel characteristic of the first channel type, and the processing module is specifically configured to:
determine, based on a first correspondence, the index or the channel key of the first channel type corresponding to the channel state information, where the first correspondence is a correspondence between channel state information and an index or a channel key of a channel type; and
obtain the channel characteristic of the first channel type from the channel characteristic library based on the index or the channel key of the first channel type.

In another possible implementation, the transceiver module is further configured to:
receive a download request from the first communication apparatus, where the download request is used to request to download the channel characteristic library; and
send a first download address to the first communication apparatus, where the first download address is used to download the channel characteristic library.

In another possible implementation, the transceiver module is further configured to:
receive, from the first communication apparatus, a first request, and a version number of the channel characteristic library stored in the first communication apparatus, where the first request is used to request a latest version of a channel characteristic library.

The processing module is further configured to:
determine whether the version number of the channel characteristic library stored in the first communication apparatus is a version number of the latest version of the signal characteristic library.

The transceiver module is further configured to:
if the version number of the channel characteristic library stored in the first communication apparatus is the version number of the latest version of the channel characteristic library, send first indication information to the first communication apparatus, where the first indication information indicates that the channel characteristic library stored in the first communication apparatus is the latest version of the channel characteristic library; or
if the version number of the channel characteristic library stored in the first communication apparatus is not the version number of the latest version of the channel characteristic library, send a second download address to the first communication apparatus, where the second download address is used to download the latest version of the channel characteristic library.

In another possible implementation, the processing module is further configured to:
obtain a plurality of pieces of historical channel state information; and
establish the channel characteristic library based on the plurality of pieces of historical channel state information.

In another possible implementation, the processing module is specifically configured to:
determine a channel characteristic set corresponding to each of the plurality of pieces of historical channel state information, where the channel characteristic set includes one or more channel characteristics;
classify the plurality of pieces of historical channel state information based on the channel characteristic set corresponding to each piece of historical channel state information, to obtain historical channel state information corresponding to each of a plurality of channel types; and
determine, based on the historical channel state information corresponding to each of the plurality of channel types, a channel characteristic corresponding to each of the plurality of channel types.

In another possible implementation, the channel characteristic set corresponding to each piece of channel state information includes at least one of the following: a quantity of a plurality of paths, and an azimuth angle, a zenith angle, a delay, and a Doppler shift that correspond to each of the plurality of paths.

In another possible implementation, the transceiver module is further configured to:
receive a second reference signal and a second notification message from a third communication apparatus.

The processing module is further configured to:
determine first channel state information based on the second notification message and the second reference signal; and
determine channel characteristic information of a second channel type corresponding to the second channel state information.

The transceiver module is further configured to:
send the channel characteristic information of the second channel type to the third communication apparatus.

The second notification message is used to request the channel characteristic information of the second channel type, and a channel characteristic of the second channel type is from the channel characteristic library.

In another possible implementation, the processing module is further configured to:
allocate a reference signal pilot sequence to each of the first communication apparatus and the third communication apparatus based on the channel characteristic of the first channel type and the channel characteristic of the second channel type.

A fifth aspect of this application provides a communication apparatus. The communication apparatus includes a processor. The processor is configured to invoke a computer program or computer instructions in a memory, so that the processor implements any one of the implementations of the first aspect.

Optionally, the communication apparatus further includes the memory.

Optionally, the memory and the processor are integrated together.

Optionally, the communication apparatus further includes a transceiver, and the processor is configured to control the transceiver to receive or send a signal.

A sixth aspect of this application provides a communication apparatus. The communication apparatus includes a processor. The processor is configured to invoke a computer program or computer instructions in a memory, so that the processor implements any one of the implementations of the second aspect.

Optionally, the communication apparatus further includes the memory.

Optionally, the memory and the processor are integrated together.

Optionally, the communication apparatus further includes a transceiver, and the processor is configured to control the transceiver to receive or send a signal.

A seventh aspect of this application provides a computer program product including instructions. When the computer program product runs on a computer, the computer is enabled to perform any one of the implementations of the first aspect or the second aspect.

An eighth aspect of this application provides a computer-readable storage medium including computer instructions. When the instructions are run on a computer, the computer is enabled to perform any one of the implementations of the first aspect or the second aspect.

A ninth aspect of this application provides a chip apparatus including a processor. The processor is configured to invoke a computer program or computer instructions in a memory, so that the processor performs any one of the implementations of the first aspect.

Optionally, the processor is coupled to the memory through an interface.

A tenth aspect of this application provides a chip apparatus including a processor. The processor is configured to invoke a computer program or computer instructions in a memory, so that the processor performs any one of the implementations of the second aspect.

Optionally, the processor is coupled to the memory through an interface.

An eleventh aspect of an embodiment of this application provides a communication apparatus. The communication apparatus includes a logic circuit and an input/output interface. The logic circuit is configured to perform the processing operation in any one of the implementations of the first aspect, and the input/output interface is configured to perform the receiving and sending operations in any one of the implementations of the first aspect.

A twelfth aspect of an embodiment of this application provides a communication apparatus. The communication apparatus includes a logic circuit and an input/output interface. The logic circuit is configured to perform the processing operation in any one of the implementations of the second aspect, and the input/output interface is configured to perform the receiving and sending operations in any one of the implementations of the second aspect.

A thirteenth aspect of an embodiment of this application provides a communication system. The communication system includes the first communication apparatus in the third aspect and the second communication apparatus in the fourth aspect.

It can be learned from the foregoing technical solutions that embodiments of this application have the following advantages.

It can be learned from the foregoing technical solutions that the first communication apparatus sends the first reference signal and the first notification message to the second communication apparatus, and the first communication apparatus receives the channel characteristic information of the first channel type from the second communication apparatus. The first channel type is the channel type corresponding to the channel state information determined by the second communication apparatus based on the first reference signal. The first notification message is used to request the channel characteristic information of the first channel type, the channel characteristic of the first channel type is from the channel characteristic library, and the channel characteristic library includes the channel characteristics of the one or more channel types. It can be learned from the foregoing solution that the first communication apparatus may request the channel characteristic information of the first channel type from the second communication apparatus based on the first notification message. Then, the first communication apparatus receives the channel characteristic information of the first channel type from the second communication apparatus. The channel characteristic of the first channel type is from the channel characteristic library, and the channel characteristic library includes the channel characteristics of the one or more channel types. Therefore, the first communication apparatus may obtain the channel characteristic of the first channel type based on the channel characteristic information of the first channel type. In this way, the first communication apparatus performs corresponding channel processing based on the channel characteristic of the first channel type, to improve communication performance. For example, the first communication apparatus may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus may further improve precision of channel estimation based on the channel characteristic of the first channel type, to improve communication performance.

### BRIEF DESCRIPTION OF DRAWINGS

FIG. 1 is a diagram of a communication system according to an embodiment of this application;
FIG. 2A, FIG. 2B, and FIG. 2C are a diagram of an embodiment of a channel characteristic obtaining method according to an embodiment of this application;
FIG. 3 is a diagram of a channel characteristic according to an embodiment of this application;
FIG. 4 is a diagram in which a second communication apparatus establishes a channel characteristic library according to an embodiment of this application;
FIG. 5 is a diagram of an interaction between a first communication apparatus and a second communication apparatus according to an embodiment of this application;
FIG. 6 is a diagram of another interaction between a first communication apparatus and a second communication apparatus according to an embodiment of this application;
FIG. 7 is a diagram of another interaction between a first communication apparatus and a second communication apparatus according to an embodiment of this application;
FIG. 8 is a diagram of an embodiment of a channel characteristic obtaining method according to an embodiment of this application;
FIG. 9 is a diagram of a structure of a first communication apparatus according to an embodiment of this application;
FIG. 10 is a diagram of a structure of a second communication apparatus according to an embodiment of this application;
FIG. 11 is a diagram of another structure of a first communication apparatus according to an embodiment of this application;
FIG. 12 is a diagram of another structure of a second communication apparatus according to an embodiment of this application;
FIG. 13 is a diagram of a structure of a terminal device according to an embodiment of this application; and
FIG. 14 is a diagram of a structure of a communication apparatus according to an embodiment of this application.

### DESCRIPTION OF EMBODIMENTS

Embodiments of this application provide a channel characteristic obtaining method and a related apparatus, to improve communication performance.

The following clearly and completely describes technical solutions in embodiments of this application with reference to the accompanying drawings in embodiments of this application. It is clear that the described embodiments are merely a part of but not all of embodiments of this application. All other embodiments obtained by a person skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "comprise", "have", and their variants mean "including but not limited to", unless otherwise specifically emphasized in another manner.

In descriptions of this application, unless otherwise specified, "/" means "or". For example, A/B may mean A or B. "And/or" in this specification describes only an association relationship between associated objects and represents that three relationships may exist. For example, A and/or B may represent the following three cases: Only A exists, both A and B exist, and only B exists. In addition, "at least one" means one or more, and "a plurality of" means two or more. "At least one of the following items (pieces)" or a similar expression thereof means any combination of these items, including any combination of singular items (pieces) or plural items (pieces). For example, at least one (piece) of a, b, or c may represent a, b, c, a and b, a and c, b and c, or a, b, and c. a, b, and c each may be singular or plural.

The technical solutions provided in this application may be applied to various communication systems, for example, a 5^{th} generation (5th generation, 5G) mobile communication system, a new radio (new radio, NR) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a mobile communication system (for example, a 6G mobile communication system) after a 5G network, and a vehicle-to-everything (vehicle-to-everything, V2X) communication system.

The communication systems to which this application is applicable include a first communication apparatus and a second communication apparatus. The first communication apparatus is a terminal device, and the second communication apparatus is a network device; or the first communication apparatus is a network device, and the second communication apparatus is a terminal device. This is not specifically limited in this application.

The following describes the terminal device and the network device in this application.

The terminal device may be a wireless terminal device that can receive scheduling and indication information of the network device. The terminal device may be a device that provides a user with voice and/or data connectivity, a handheld device that has a wireless connection function, or another processing device connected to a wireless modem.

The terminal device is also referred to as user equipment (user equipment, UE), a mobile station (mobile station, MS), a mobile terminal (mobile terminal, MT), or the like. The terminal device is a device that includes a wireless communication function (providing a user with voice/data connectivity), for example, a handheld device or an in-vehicle device that has a wireless connection function. Currently, the terminal device may be, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in vehicle-to-everything, a wireless terminal in self driving (self driving), a wireless terminal in remote medical surgery (remote medical surgery), a wireless terminal in a smart grid (smart grid), a wireless terminal in transportation safety (transportation safety), an uncrewed aerial vehicle, a wireless terminal in a smart city (smart city), or a wireless terminal in a smart home (smart home). For example, the wireless terminal in vehicle-to-everything may be an in-vehicle device, a vehicle device, an in-vehicle module, a vehicle, or the like. The wireless terminal in industrial control may be a camera, a robot, or the like. The wireless terminal in the smart home may be a television, an air conditioner, a sweeper, a speaker, a set-top box, or the like.

The network device may be a device in a wireless network. For example, the network device may be a device that is deployed in a radio access network and that provides a wireless communication function for the terminal device. For example, the network device may be a radio access network (radio access network, RAN) node that connects the terminal device to the wireless network, and may also be referred to as an access network device.

The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a radio relay node, a wireless backhaul node, a satellite, an uncrewed aerial vehicle, a transmission point (transmission point, TP), a transmission and reception point (transmission and reception point, TRP), or the like; or may be a network device in a 5G mobile communication system, for example, a next generation NodeB (next generation NodeB, gNB), a transmission reception point (transmission reception point, TRP), or a TP in an NR system, or one or one group of antenna panels (including a plurality of antenna panels) of a base station in the 5G mobile communication system. Alternatively, the network device may be a network node that constitutes a gNB or a transmission point, for example, a BBU or a distributed unit (distributed unit, DU).

The following describes technical terms in this application.

Channel key: When a quantity of antennas of the first communication apparatus is sufficient, the first communication apparatus sends a reference signal to the second communication apparatus. Channel state information determined by the second communication apparatus based on the reference signal is in a one-to-one correspondence with a location of the first communication apparatus. A channel key corresponding to the channel state information may be understood as the location of the first communication apparatus. Therefore, each piece of channel state information corresponds to one channel key, and the second communication apparatus may determine, based on the channel state information determined based on the received reference signal, a channel key corresponding to the channel state information. The channel key may also be referred to as a channel state information key (channel state information key, CSI-Key).

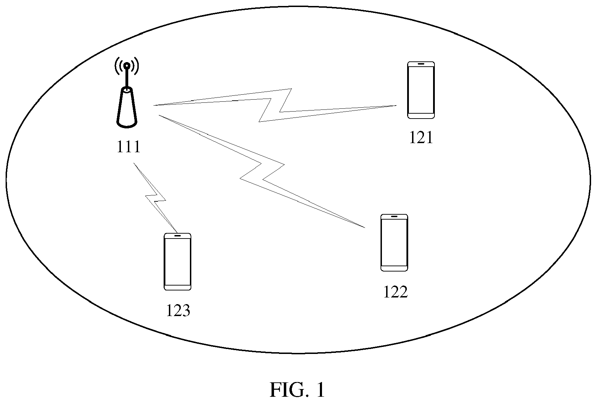

FIG. 1 is a diagram of a communication system according to an embodiment of this application. Refer to FIG. 1. The communication system includes at least one network device and at least one terminal device, for example, a network device 111, a terminal device 121, a terminal device 122, and a terminal device 123, as shown in FIG. 1. The network device 111 may perform communication transmission with the terminal device 121, the terminal device 122, and the terminal device 123. In the communication system shown in FIG. 1, a channel characteristic may be obtained between the network device and the terminal device by using the technical solution in this application. For details, refer to the following related description.

The technical solution of this application is described below with reference to specific embodiments.

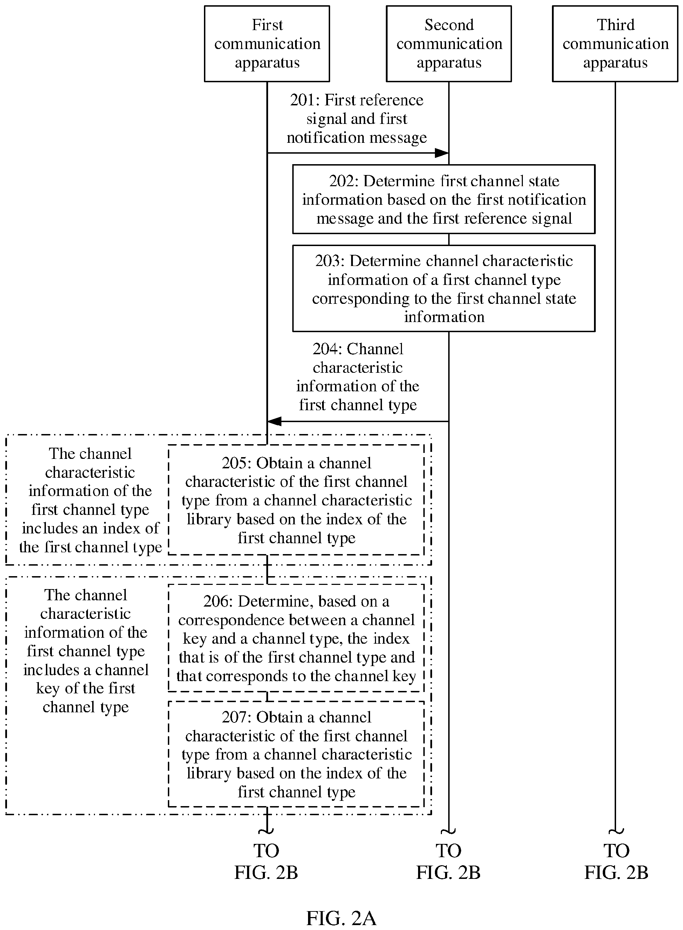

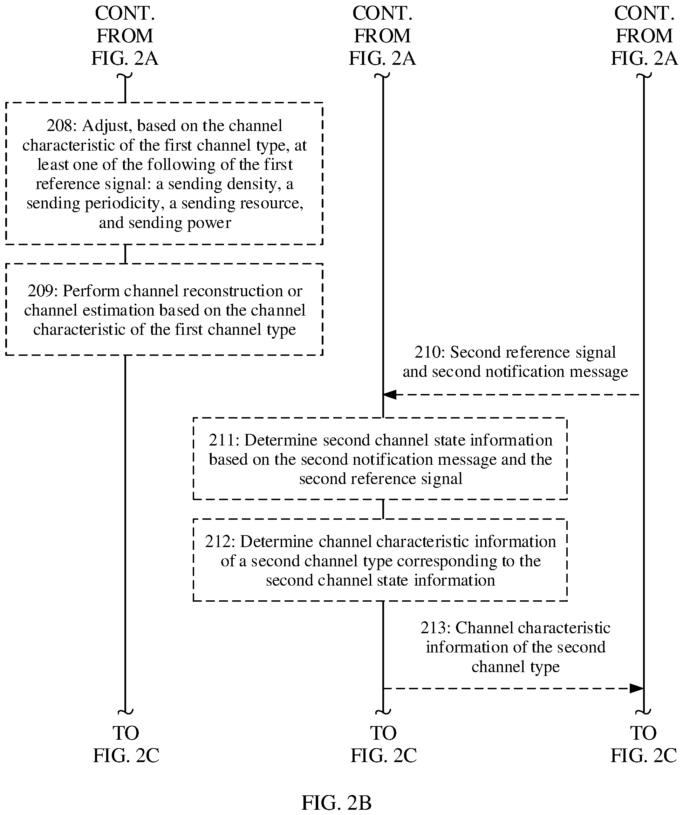

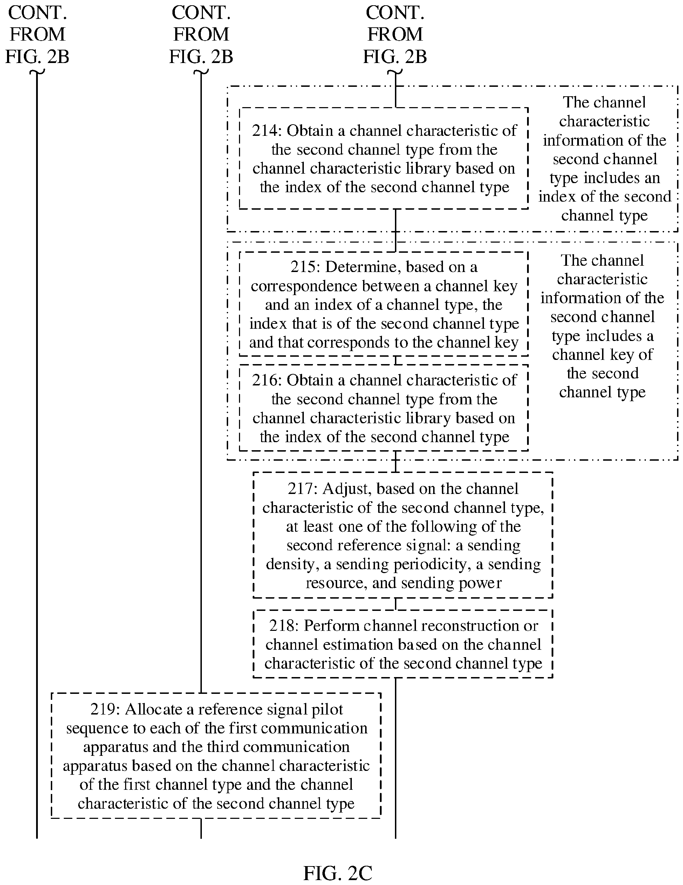

FIG. 2A, FIG. 2B, and FIG. 2C are a diagram of an embodiment of a channel characteristic obtaining method according to an embodiment of this application. Refer to FIG. 2A, FIG. 2B, and FIG. 2C. The channel characteristic obtaining method includes the following steps.

201: A first communication apparatus sends a first reference signal and a first notification message to a second communication apparatus.

Specifically, the first communication apparatus generates the first reference signal and the first notification message, and then the first communication apparatus sends the first reference signal and the first notification message to the second communication apparatus.

It should be noted that the first reference signal and the first notification message may be generated simultaneously, or may be generated separately. This is not specifically limited in this application. The first communication apparatus simultaneously sends the first reference signal and the first notification message to the second communication apparatus, or the first communication apparatus separately sends the first reference signal and the first notification message to the second communication apparatus. This is not specifically limited in this application.

In a possible implementation, the first communication apparatus is a terminal device, and the second communication apparatus is a network device. In this implementation, the first reference signal is a sounding reference signal (sounding reference signal, SRS) or another reference signal. For example, the first reference signal may be a newly defined reference signal.

In another possible implementation, the first communication apparatus is a network device, and the second communication apparatus is a terminal device. In this implementation, the first reference signal is a channel state information reference signal (channel state information reference signal, CSI-RS) or another reference signal. For example, the first reference signal may be a newly defined reference signal.

The first notification message is used to request channel characteristic information of a first channel type, and the first channel type is a channel type corresponding to first channel state information determined by the second communication apparatus based on the first reference signal. A channel characteristic of the first channel type is from a channel characteristic library, and the channel characteristic library includes channel characteristics of one or more channel types. For the channel characteristic information of the first channel type, refer to the following detailed description.

Optionally, the channel characteristic of the first channel type includes at least one of the following: a quantity of a plurality of paths, and an azimuth angle (azimuth direction), a zenith angle (zenith direction), a delay, and a Doppler shift that correspond to each of the plurality of paths. This is not specifically limited in this application.

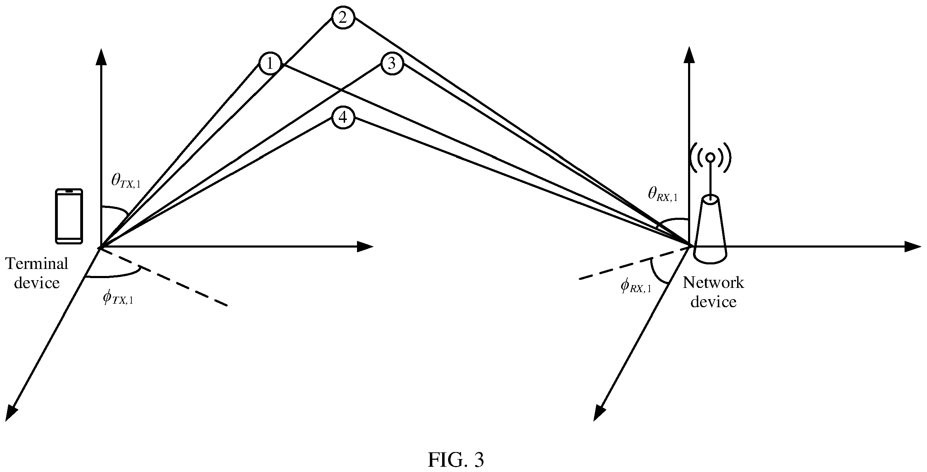

For example, as shown in FIG. 3, there are four paths between the terminal device and the network device. Each path corresponds to an azimuth angle and a zenith angle. As shown in FIG. 3, a path 1 corresponds to a receiving zenith angle *θ*_{*RX*,1}, a receiving azimuth angle *φ*_{*RX*,1}, a sending zenith angle *θ*_{*TX*,1}, and a sending azimuth angle *φ*_{*TX*,1}. The same applies to other paths.

It should be noted that FIG. 3 is merely an example. During actual application, a quantity X of the plurality of paths is not limited. For example, the quantity X of the plurality of paths may be preset, and the X paths may be X paths, on which reference signals have relatively large amplitudes, among paths for transmission between the terminal device and the network device. Alternatively, the network device may select, among paths for transmission between the terminal device and the network device, X paths on which amplitudes of reference signals are greater than a predetermined threshold. In this case, the quantity X of the plurality of paths is an unspecific value, and is specifically determined by an actual measured quantity of paths for transmission between the terminal device and the network device and amplitudes of reference signals on these paths.

The channel characteristic illustrated above is mainly related to an environment in which the first communication apparatus is located, and the channel characteristic is relatively fixed. For example, in an environment in which a plurality of paths are formed due to an obstacle, a direction and an angle at which a signal is transmitted on each path are relatively fixed. Therefore, the solution in which the first communication apparatus obtains the channel characteristic of the first channel type from the channel characteristic library is highly feasible. In other words, the channel characteristics obtained by the first communication apparatus can reflect, to some extent, channel characteristics of a channel of the first communication apparatus. This helps the first communication apparatus perform channel estimation and the like based on the channel characteristics, to improve communication performance.

The following describes the first notification message.
1. The first notification message is a request message. The first communication apparatus actively requests the channel characteristic information of the first channel type from the second communication apparatus based on the request message.

Optionally, the first communication apparatus is a terminal device, and the second communication apparatus is a network device. The following describes some possible trigger conditions in which the terminal device requests the channel characteristic information of the first channel type from the network device.

For example, to initiate an uplink service, the terminal device may actively request the channel characteristic information of the first channel type, to obtain the channel characteristic of the first channel type. The terminal device may perform channel reconstruction or estimation based on the channel characteristic of the first channel type, and then perform uplink precoding based on a reconstructed channel or an estimated channel, to improve transmission efficiency of the uplink service between the terminal device and the network device.

Optionally, before initiating a specific service, the terminal device requests the channel characteristic information of the first channel type from the network device. For example, there are requirements for high quality of service (quality of service, QoS), a low latency, high reliability, and a high throughput rate for the specific service. In this way, the terminal device performs channel reconstruction or estimation based on the channel characteristic of the first channel type, and then executes the specific service with the network device.

For example, the terminal device may actively request the channel characteristic information of the first channel type, to obtain the channel characteristic of the first channel type. The terminal device may perform channel reconstruction or estimation based on the channel characteristic of the first channel type, to improve precision of channel reconstruction or estimation.

For example, if the terminal device determines that noise interference is low in a frequency band or some frequency bands, the terminal device may actively request the channel characteristic information of the first channel type, to further optimize a channel in the frequency band. In this way, signal quality in the frequency band is improved based on the channel characteristic of the first channel type.

It can be learned that a trigger factor for the terminal device to actively request the channel characteristic information of the first channel type from the network device includes at least one of the following: a service requirement, a frequency band requirement, an interference situation, and a channel estimation precision requirement.

2. The first notification message is an acknowledgment message. The first communication apparatus confirms, to the second communication apparatus based on the acknowledgment message, that the first communication apparatus needs to obtain the channel characteristic information of the first channel type.

For example, the first communication apparatus is a terminal device, and the second communication apparatus is a network device. The network device requests the terminal device to participate in an uplink and downlink precoding optimization process. The terminal device may indicate, based on the acknowledgment message, that the terminal device may participate in the uplink and downlink precoding optimization process, and request the channel characteristic information of the first channel type based on the acknowledgment message. In this way, the terminal device performs channel reconstruction or estimation based on the obtained channel characteristic of the first channel type, and then performs uplink precoding based on a reconstructed channel or an estimated channel, to improve uplink transmission efficiency.

The channel characteristic library includes channel characteristics of one or more channel types, and the second communication apparatus may establish the channel characteristic library.

One channel type corresponds to one or more pieces of channel state information, and different channel types correspond to different channel state information. Each channel type has a corresponding index, and different channel types have different indexes.

Each piece of channel state information corresponds to one channel key, and different channel state information corresponds to different channel keys.

The following describes, with reference to step 1 to step 3, a process in which the second communication apparatus establishes the channel characteristic library.

Step 1: The second communication apparatus obtains a plurality of pieces of historical channel state information.

The plurality of pieces of historical channel state information are determined based on a reference signal transmitted between the second communication apparatus and another communication apparatus.

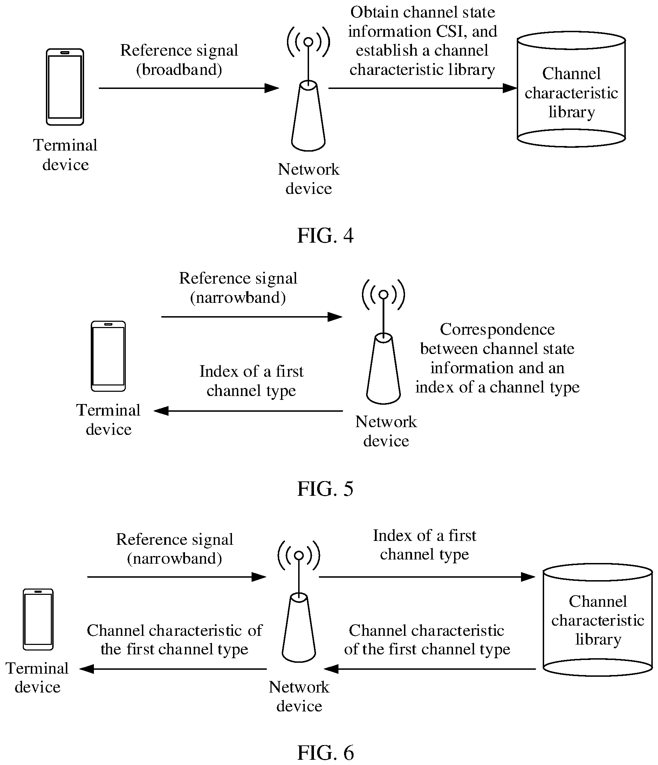

For example, the second communication apparatus is a network device, and the another communication apparatus may be a terminal device within signal coverage of the network device. As shown in FIG. 4, the terminal device may send a plurality of reference signals to the network device on a broadband. The network device may determine the plurality of pieces of historical channel state information based on the plurality of received reference signals.

Step 2: The second communication apparatus establishes the channel characteristic library based on the plurality of pieces of historical channel state information.

The following describes step 2 in two cases.

Case 1: One channel type corresponds to a plurality of pieces of channel state information. The following describes a possible implementation of step 2 with reference to step a to step c.

Step a: The second communication apparatus determines a channel characteristic set corresponding to each of the plurality of pieces of historical channel state information, where the channel characteristic set includes one or more channel characteristics.

The channel characteristic set corresponding to each piece of historical channel state information includes at least one of the following: a quantity of a plurality of paths, and an azimuth angle, a zenith angle, a delay, and a Doppler shift that correspond to each of the plurality of paths.

Specifically, the second communication apparatus may analyze each piece of historical channel state information, and parse the historical channel state information to obtain the channel characteristic set corresponding to each piece of historical channel state information.

Step b: The second communication apparatus classifies the plurality of pieces of historical channel state information based on the channel characteristic set corresponding to each piece of historical channel state information, to obtain historical channel state information corresponding to each of a plurality of channel types.

For example, the channel characteristic set corresponding to each piece of historical channel state information includes a quantity of a plurality of paths, and an azimuth angle and a zenith angle that correspond to each of the plurality of paths. The second communication apparatus classifies, into a first part of channel state information, historical channel state information corresponding to a quantity of a plurality of paths greater than a corresponding threshold (for example, the threshold may be 10) among the plurality of pieces of historical channel state information, and classifies, into a second part of channel state information, historical channel state information corresponding to a quantity of a plurality of paths less than the corresponding threshold (for example, the threshold may be 10) among the plurality of pieces of historical channel state information. Then, the second communication apparatus classifies, based on ranges within which the azimuth angle and the zenith angle that correspond to each path fall, the first part of channel state information into a third part of channel state information and a fourth part of channel state information, and the second part of channel state information into a fifth part of channel state information and a sixth part of channel state information. Therefore, the six parts of channel state information may be considered as historical channel state information corresponding to each of the six channel types.

Step c: The second communication apparatus determines, based on the historical channel state information corresponding to each of the plurality of channel types, a channel characteristic corresponding to each of the plurality of channel types.

For example, the second communication apparatus classifies a plurality of pieces of historical channel state information into historical channel state information corresponding to six channel types, which are specifically: channel state information 1 and channel state information 2 that correspond to a channel type 1, channel state information 3 and channel state information 4 that correspond to a channel type 2, channel state information 5, channel state information 6, and channel state information 7 that correspond to a channel type 3, channel state information 8 and channel state information 9 that correspond to a channel type 4, channel state information 10 and channel state information 11 that correspond to a channel type 5, and channel state information 12 and channel state information 13 that correspond to a channel type 6. The second communication apparatus may determine, based on the historical channel state information corresponding to each channel type, the channel characteristic corresponding to each channel type.

**Table 1**

| Index of a channel type | Quantity of a plurality of paths | Sending azimuth angle corresponding to each path | Sending zenith angle corresponding to each path |
|---|---|---|---|
| 1 | 2 | {20°, 30°} | {20°, 10°} |
| 2 | 3 | {15°, 20°, 40°} | {40°, 40°, 50°} |
| 3 | 3 | {15°, 20°, 40°} | {40°, 40°, 40°} |
| 4 | 5 | {50°, 50°, 60°, 50°, 50°} | {50°, 50°, 60°, 50°, 60°} |
| 5 | 5 | {50°, 45°, 60°, 50°, 45°} | {50°, 50°, 60°, 50°, 60°} |
| 6 | 5 | {45°, 45°, 60°, 50°, 60°} | {60°, 60°, 50°, 50°, 60°} |

Optionally, in this implementation, the second communication apparatus establishes a correspondence between channel state information and an index of a channel type based on the historical channel state information corresponding to the plurality of channel types.

For example, the following shows the correspondence between the channel state information and the index of the channel type with reference to Table 2.

**Table 2**

| Channel state information | Index of a channel type |
|---|---|
| Channel state information 1 and channel state information 2 | 1 |
| Channel state information 3 and channel state information 4 | 2 |
| Channel state information 5, channel state information 6, and channel state information 7 | 3 |
| Channel state information 8 and channel state information 9 | 4 |
| Channel state information 10 and channel state information 11 | 5 |
| Channel state information 12 and channel state information 13 | 6 |

Optionally, in this implementation, the second communication apparatus establishes a correspondence between a channel key and an index of a channel type based on the historical channel state information corresponding to the plurality of channel types and a channel key corresponding to each piece of historical channel state information. For example, the following describes the correspondence between the channel key and the index of the channel type with reference to Table 3.

**Table 3**

| Channel key | Index of a channel type |
|---|---|
| Channel key 1 and channel key 2 | 1 |
| Channel key 3 and channel key 4 | 2 |
| Channel key 5, channel key 6, and channel key 7 | 3 |
| Channel key 8 and channel key 9 | 4 |
| Channel key 10 and channel key 11 | 5 |
| Channel key 12 and channel key 13 | 6 |

Case 2: One channel type corresponds to one piece of channel state information. The following describes a possible implementation of step 2 with reference to step d and step e.

Step d: The second communication apparatus determines a channel characteristic set corresponding to each of the plurality of pieces of historical channel state information, where the channel characteristic set includes one or more channel characteristics.

Step d is similar to step a. For details, refer to the related descriptions of step a. Details are not described herein again.

Step e: The second communication apparatus uses the channel characteristic in the channel characteristic set corresponding to each piece of historical channel state information as a channel characteristic of a channel type corresponding to the historical channel state information.

Optionally, in this implementation, the second communication apparatus establishes a correspondence between historical channel state information and an index of a channel type.

One channel type corresponds to one piece of channel state information, and a channel key corresponding to a channel state corresponding to the channel type may be used as an index of the channel type. That is, the second communication apparatus establishes a correspondence between the historical channel state information and the channel key.

In some implementations, the first notification message further includes resource information, and the resource information is a resource used by the first communication apparatus to transmit the first reference signal to the second communication apparatus.

In some implementations, the first notification message further includes second indication information, and the second indication information indicates to obtain some channel characteristics of the first channel type. For example, channel characteristics of a first channel in the channel characteristic library include a characteristic 1 to a characteristic 3, and the first communication apparatus may indicate, by using the second indication information, to request the characteristic 1 and the characteristic 2.

202: The second communication apparatus determines the first channel state information based on the first notification message and the first reference signal.

Specifically, the first communication apparatus determines, based on the first notification message, that the first communication apparatus requests to obtain the channel characteristic information of the first channel type. The first channel type is the channel type corresponding to the first channel state information determined by the second communication apparatus based on the first reference signal. Then, the first communication apparatus determines the first channel state information based on the first reference signal.

Optionally, the first communication apparatus may send a plurality of reference signals to the second communication apparatus. The first notification message further includes resource information, and the resource information is a resource used by the first communication apparatus to transmit the first reference signal to the second communication apparatus.

The second communication apparatus may determine, based on the resource information, that the first communication apparatus requests to obtain the channel characteristic information of the first channel type. The first channel type is the channel type corresponding to the first channel state information determined by the second communication apparatus based on the first reference signal.

203: The second communication apparatus determines the channel characteristic information of the first channel type corresponding to the first channel state information.

The channel characteristic information of the first channel type includes an index of the first channel type, the channel characteristic of the first channel type, or a channel key of the first channel type.

Specifically, the second communication apparatus determines the first channel type corresponding to the first channel state information. The second communication apparatus determines the channel characteristic information of the first channel type.

The following separately provides descriptions with reference to content of the channel characteristic information of the first channel type.
1. The channel characteristic information of the first channel type includes the index of the first channel type.

In this implementation, the first communication apparatus locally stores the channel characteristic library. The second communication apparatus may determine, based on a relationship between channel state information and an index of a channel type, the index of the first channel type corresponding to the first channel state information. The second communication apparatus may send the index of the first channel type to the first communication apparatus. Then, the first communication apparatus queries the channel characteristic library based on the index of the first channel type, to obtain the channel characteristic of the first channel type.

For example, as shown in FIG. 5, the first communication apparatus is a terminal device, and the second communication apparatus is a network device. The network device determines, based on the correspondence between the channel state information and the index of the channel type, the index of the first channel type corresponding to the first channel state information. The network device sends the index of the first channel type to the terminal device.

2. The channel characteristic information of the first channel type includes the channel characteristic of the first channel type.

In this implementation, the second communication apparatus may determine, based on a relationship between channel state information and an index of a channel type, the index of the first channel type corresponding to the first channel state information. The second communication apparatus obtains the channel characteristic of the first channel type from the channel characteristic library based on the index of the first channel type.

Optionally, the first notification message further includes the second indication information, and the second indication information indicates to obtain the some channel characteristics of the first channel type. The second communication apparatus obtains the some channel characteristics of the first channel type from the channel characteristic library based on the second indication information and the index of the first channel type. That is, the channel characteristic information of the first channel type includes the some channel characteristics of the first channel type.

For example, as shown in FIG. 6, the first communication apparatus is a terminal device, and the second communication apparatus is a network device. The network device determines, based on the correspondence between the channel state information and the index of the channel type, the index of the first channel type corresponding to the first channel state information. The network device searches the channel characteristic library for the channel characteristic of the first channel type based on the index of the first channel type. The network device sends the channel characteristic of the first channel type to the terminal device.

3. The channel characteristic information of the first channel type includes the channel key of the first channel type.

In this implementation, the second communication apparatus may determine, based on a relationship between channel state information and a channel key, a channel key corresponding to the first channel state information. In either case 1 in which one channel type corresponds to a plurality of channel keys or case 2 in which one channel type corresponds to one channel key, the second communication apparatus provides, for the first communication apparatus, the channel key corresponding to the first channel state information, and the first communication apparatus may find, based on the channel key, the first channel type corresponding to the first channel state information.

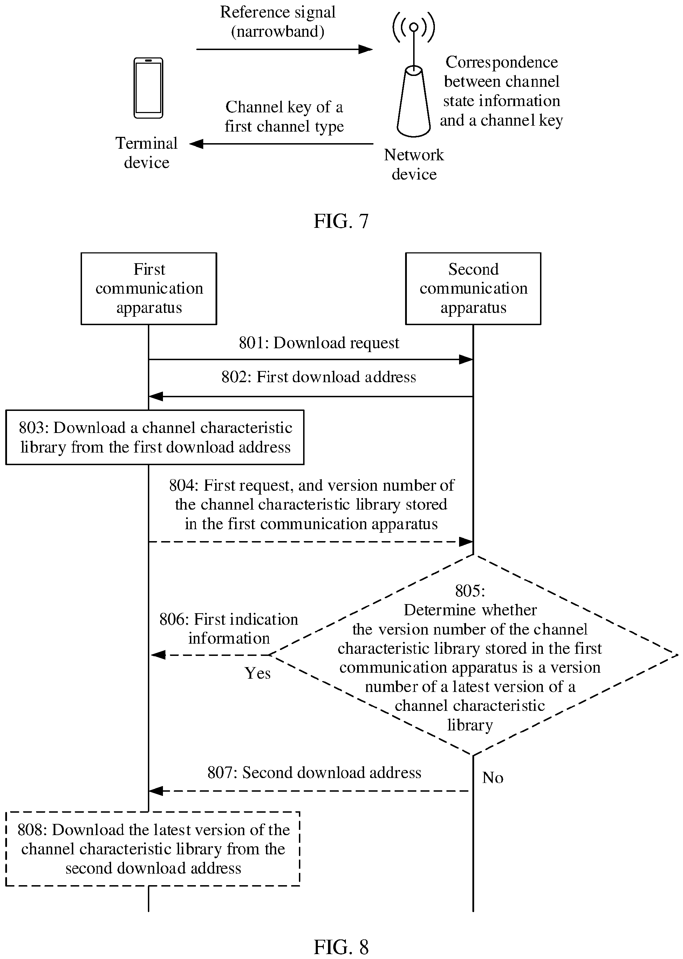

For example, as shown in FIG. 7, the first communication apparatus is a terminal device, and the second communication apparatus is a network device. The network device determines, based on a correspondence between channel state information and a channel key, the channel key corresponding to the first channel state information, and sends the channel key as the channel key of the first channel type to the first communication apparatus.

204: The second communication apparatus sends the channel characteristic information of the first channel type to the first communication apparatus.

The following describes step 204 with reference to the channel characteristic information of the first channel type.
1. The channel characteristic information of the first channel type includes the index of the first channel type.

In this implementation, the embodiment shown in FIG. 2A, FIG. 2B, and FIG. 2C further includes step 205, and step 205 may be performed after step 204.

205: The first communication apparatus obtains the channel characteristic of the first channel type from the channel characteristic library based on the index of the first channel type.

For example, it can be learned from the channel characteristic library shown in Table 1 that the index of the first channel type is 1, and the first communication apparatus obtains, from Table 1, a channel characteristic corresponding to the index 1 of the first channel type.

It should be noted that, optionally, the first communication apparatus obtains the channel characteristic library. For a specific process, refer to the following related descriptions of the embodiment shown in FIG. 8.

2. The channel characteristic information of the first channel type includes the channel characteristic of the first channel type.

In this implementation, the first communication apparatus may directly obtain the channel characteristic of the first channel type from the second communication apparatus.

3. The channel characteristic information of the first channel type includes the channel key of the first channel type.

In this implementation, the embodiment shown in FIG. 2A, FIG. 2B, and FIG. 2C further includes step 206 and step 207.

206: The first communication apparatus determines, based on the correspondence between the channel key and the index of the channel type, the index that is of the first channel type and that corresponds to the channel key.

For example, the channel key of the first channel type is a channel key 1, and the first communication apparatus may determine, with reference to Table 3, the index 1 that is of the channel type and that corresponds to the channel key 1.

Optionally, the first communication apparatus may obtain the correspondence between the channel key and the index of the channel type from the second communication apparatus. It can be learned from case 1 in which the second communication apparatus establishes the channel characteristic library that, one channel type corresponds to a plurality of pieces of channel state information, that is, one channel type corresponds to a plurality of channel keys. It can be learned from case 2 in which the second communication apparatus establishes the channel characteristic library that, one channel type corresponds to one piece of channel state information, that is, one channel type corresponds to one channel key. The first communication apparatus may obtain, based on the correspondence between the channel key and the index of the channel type, the index that is of the first channel type and that corresponds to the channel key.

207: The first communication apparatus obtains the channel characteristic of the first channel type from the channel characteristic library based on the index of the first channel type.

For example, it can be learned from the channel characteristic library shown in Table 1 that the index of the first channel type is 2, and the first communication apparatus obtains, from Table 1, a channel characteristic corresponding to the index 2 of the first channel type.

It should be noted that, optionally, the first communication apparatus obtains the channel characteristic library. For a specific process, refer to the following related descriptions of the embodiment shown in FIG. 8.

Optionally, the embodiment shown in FIG. 2A, FIG. 2B, and FIG. 2C further includes step 208 and step 209. Step 208 and step 209 may be performed after step 207.

208: The first communication apparatus adjusts, based on the channel characteristic of the first channel type, at least one of the following of the first reference signal: a sending density, a sending periodicity, a sending resource, and sending power.

For example, the first communication apparatus may select a subcarrier with better channel quality to send the first reference signal; or the first communication apparatus increases the sending density of the first reference signal; or the first communication apparatus increases the sending power of the first reference signal. This helps the second communication apparatus feed back a more accurate index or channel key of a channel type to the first communication apparatus. In this way, the first communication apparatus may select a channel characteristic of the channel type from the channel characteristic library based on the index or the channel key of the channel type.

209: The first communication apparatus performs channel reconstruction or estimation based on the channel characteristic of the first channel type.

For example, the first communication apparatus is a terminal device, and the terminal device performs channel reconstruction or estimation based on the channel characteristic of the first channel type. Then, the terminal device performs uplink precoding based on a reconstructed channel or an estimated channel. In this way, uplink transmission efficiency of the terminal device is improved, and communication transmission performance is improved.

Optionally, the embodiment shown in FIG. 2A, FIG. 2B, and FIG. 2C further includes step 210 to step 218.

210: A third communication apparatus sends a second reference signal and a second notification message to the second communication apparatus, and correspondingly, the second communication apparatus receives the second reference signal and the second notification message from the third communication apparatus.

211: The second communication apparatus determines second channel state information based on the second notification message and the second reference signal.

212: The second communication apparatus determines channel characteristic information of a second channel type corresponding to the second channel state information.

213: The second communication apparatus sends the channel characteristic information of the second channel type to the third communication apparatus, and correspondingly, the third communication apparatus receives the channel characteristic information of the second channel type from the second communication apparatus.

Step 210 to step 213 are similar to step 201 to step 204. For details, refer to the foregoing related descriptions. Details are not described herein again.

Optionally, if the channel characteristic information of the second channel type includes an index of the second channel type, the embodiment shown in FIG. 2A, FIG. 2B, and FIG. 2C further includes step 214, and step 214 may be performed after step 213.

214: The third communication apparatus obtains a channel characteristic of the second channel type from the channel characteristic library based on the index of the second channel type.

Step 214 is similar to step 205. For details, refer to the related description of step 205.

Optionally, if the channel characteristic information of the second channel type includes a channel key of the second channel type, the embodiment shown in FIG. 2A, FIG. 2B, and FIG. 2C further includes step 215 and step 216, and step 215 and step 216 may be performed after step 213.

215: The third communication apparatus determines, based on a correspondence between a channel key and an index of a channel type, an index that is of the second channel type and that corresponds to the channel key.

216: The third communication apparatus obtains the channel characteristic of the second channel type from the channel characteristic library based on the index of the second channel type.

Step 215 and step 216 are similar to step 206 and step 207. For details, refer to the related descriptions of step 206 and step 207.

Optionally, the embodiment shown in FIG. 2A, FIG. 2B, and FIG. 2C further includes step 217 and step 218.

217: The third communication apparatus adjusts, based on the channel characteristic of the second channel type, at least one of the following of the second reference signal: a sending density, a sending periodicity, a sending resource, and sending power.

218: The third communication apparatus performs channel reconstruction or channel estimation based on the channel characteristic of the second channel type.

Step 217 is similar to step 208 and step 209. For details, refer to the related descriptions of step 208 and step 209. Details are not described herein again.

It should be noted that there is no fixed execution sequence between step 201 to step 209 and step 210 to step 218. Step 201 to step 209 may be first performed, and then step 210 to step 218 may be performed; or step 210 to step 218 may be first performed, and then step 201 to step 209 may be performed; or step 201 to step 209 and step 210 to step 218 may be simultaneously performed based on a situation. This is not specifically limited in this application.

Optionally, the embodiment shown in FIG. 2A, FIG. 2B, and FIG. 2C further includes step 219. Step 219 may be performed after step 213.

219: The second communication apparatus allocates a reference signal pilot sequence to each of the first communication apparatus and the third communication apparatus based on the channel characteristic of the first channel type and the channel characteristic of the second channel type.

For example, the first communication apparatus is a first terminal device, the second communication apparatus is a second terminal device, and the third communication apparatus is a network device. The network device obtains the channel characteristic of the first channel type and the channel characteristic of the second channel type from the channel characteristic library. The network device determines, based on the channel characteristic of the first channel type and the channel characteristic of the second channel type, that a channel of the first channel type and the second channel type are sparse in specific transform domain (for example, angle domain or time domain). The network device may allocate a same pilot sequence to the terminal device, to implement reuse of the pilot sequence. Therefore, overheads on a time frequency resource are reduced when a multi-user pilot is transmitted on a radio air interface.

Optionally, after the second communication apparatus obtains the channel characteristic of the first channel type, the second communication apparatus may perform channel estimation based on the channel characteristic of the first channel type, and perform downlink precoding based on an estimated channel. In this way, downlink transmission efficiency between the first communication apparatus and the second communication apparatus is improved.

Optionally, after the second communication apparatus obtains the channel characteristic of the second channel type, the second communication apparatus may perform channel estimation based on the channel characteristic of the second channel type, and perform downlink precoding based on an estimated channel. In this way, downlink transmission efficiency between the third communication apparatus and the second communication apparatus is improved.

In embodiments of this application, the first communication apparatus sends the first reference signal and the first notification message to the second communication apparatus, and the first communication apparatus receives the channel characteristic information of the first channel type from the second communication apparatus. The first channel type is the channel type corresponding to the channel state information determined by the second communication apparatus based on the first reference signal. The first notification message is used to request the channel characteristic information of the first channel type, the channel characteristic of the first channel type is from the channel characteristic library, and the channel characteristic library includes the channel characteristics of the one or more channel types. It can be learned from the foregoing solution that the first communication apparatus may request the channel characteristic information of the first channel type from the second communication apparatus based on the first notification message. Then, the first communication apparatus receives the channel characteristic information of the first channel type from the second communication apparatus. The channel characteristic of the first channel type is from the channel characteristic library, and the channel characteristic library includes the channel characteristics of the one or more channel types. Therefore, the first communication apparatus may obtain the channel characteristic of the first channel type based on the channel characteristic information of the first channel type. In this way, the first communication apparatus performs corresponding channel processing based on the channel characteristic of the first channel type, to improve communication performance. For example, the first communication apparatus may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus may further improve precision of channel estimation based on the channel characteristic of the first channel type, to improve communication performance.

With reference to an embodiment shown in FIG. 8, the following describes a process in which a first communication apparatus obtains a channel characteristic library and updates the channel characteristic library.

FIG. 8 is a diagram of another embodiment of a channel characteristic obtaining method according to an embodiment of this application. Refer to FIG. 8. The method includes the following steps.

801: A first communication apparatus sends a download request to a second communication apparatus, and correspondingly, the second communication apparatus receives the download request from the first communication apparatus.

The download request is used to request a channel characteristic library.

802: The second communication apparatus sends a first download address to the first communication apparatus, and correspondingly, the first communication apparatus receives the first download address from the second communication apparatus.

The first download address is used to download the channel characteristic library.

803: The first communication apparatus downloads the channel characteristic library from the first download address.

Specifically, the first communication apparatus may download the channel characteristic library offline or online from the first download address. Optionally, the first communication apparatus may download all or some information of the channel characteristic library.

Optionally, the embodiment shown in FIG. 8 further includes step 804 to step 808. Step 804 to step 808 may be performed after step 803.

804: The first communication apparatus sends a first request, and a version number of the channel characteristic library stored in the first communication apparatus to the second communication apparatus, and correspondingly, the second communication apparatus receives, from the first communication apparatus, the first request, and the version number of the channel characteristic library stored in the first communication apparatus.

The first request is used to request a latest version of a channel characteristic library.

Specifically, the second communication apparatus may update the channel characteristic library based on an actual situation. For example, the second communication apparatus updates the channel characteristic library based on a preset periodicity; or the second communication apparatus may update the channel characteristic library when determining that current communication quality is poor (for example, a communication transmission latency is large, and a throughput rate is low). The first communication apparatus may request the latest version of the channel characteristic library from the second communication apparatus, to accurately perform channel estimation or reconstruction, thereby improving communication transmission efficiency.

Optionally, the first communication apparatus may request the latest version of the channel characteristic library based on the preset periodicity; or the first communication apparatus may request the latest version of the channel characteristic library when determining that current communication quality is poor. This is not specifically limited in this application.

805: The second communication apparatus determines whether the version number of the channel characteristic library stored in the first communication apparatus is a version number of the latest version of the channel characteristic library, where if the version number of the channel characteristic library stored in the first communication apparatus is the version number of the latest version of the channel characteristic library, step 806 is performed; or if the version number of the channel characteristic library stored in the first communication apparatus is not the version number of the latest version of the channel characteristic library, step 807 is performed.

Specifically, the second communication apparatus determines whether the version number of the channel characteristic library stored in the first communication apparatus is consistent with the version number of the latest version of the channel characteristic library that exists locally in the second communication apparatus. If the version number of the channel characteristic library stored in the first communication apparatus is consistent with the version number of the latest version of the channel characteristic library that exists locally in the second communication apparatus, step 806 is performed; or if the version number of the channel characteristic library stored in the first communication apparatus is not consistent with the version number of the latest version of the channel characteristic library that exists locally in the second communication apparatus, step 807 is performed.

806: The second communication apparatus sends first indication information to the first communication apparatus, and correspondingly, the first communication apparatus receives the first indication information from the second communication apparatus.

The first indication information indicates that the channel characteristic library stored in the first communication apparatus is the latest version of the channel characteristic library.

807: The second communication apparatus sends a second download address to the first communication apparatus, and correspondingly, the first communication apparatus receives the second download address from the second communication apparatus.

The second download address is used to download the latest version of the channel characteristic library.

808: The second communication apparatus downloads the latest version of the channel characteristic library from the second download address.

Specifically, the first communication apparatus may download the latest version of the channel characteristic library offline or online from the second download address. Optionally, the first communication apparatus may download all or some information of the latest version of the channel characteristic library.

A process of obtaining the channel characteristic library by a third communication apparatus is similar to a process of updating the channel characteristic library. For details, refer to the related descriptions of the embodiment shown in FIG. 8. Details are not described herein again.

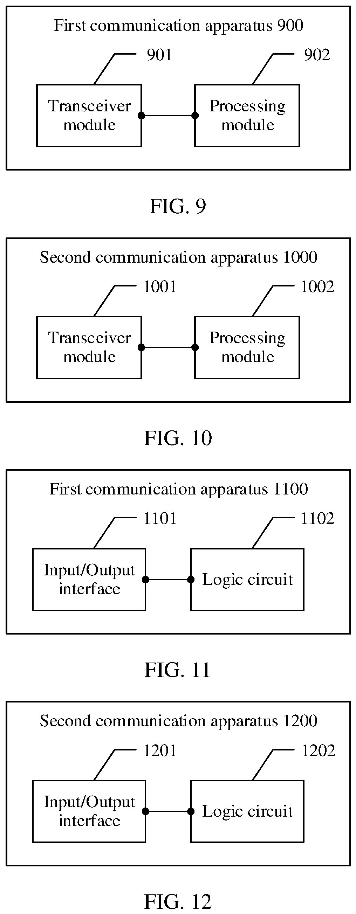

The following describes a first communication apparatus provided in an embodiment of this application. FIG. 9 is a diagram of a structure of a first communication apparatus according to an embodiment of this application. The first communication apparatus 900 may be configured to perform the steps performed by the first communication apparatus in the embodiments shown in FIG. 2A, FIG. 2B, FIG. 2C, and FIG. 8. For details, refer to the related descriptions in the foregoing method embodiments.

The first communication apparatus 900 includes a transceiver module 901 and a processing module 902. The transceiver module 901 may implement a corresponding communication function, and the transceiver module 901 may also be referred to as a communication interface or a communication unit. The processing module 902 is configured to perform a processing operation.

Optionally, the first communication apparatus 900 may further include a storage module. The storage module may be configured to store an instruction and/or data. The processing module 902 may read the instruction and/or the data in the storage module, so that the first communication apparatus implements the method embodiments shown in FIG. 2A, FIG. 2B, FIG. 2C, and FIG. 8.

The first communication apparatus 900 may be configured to execute the action performed by the first communication apparatus in the foregoing method embodiments. The first communication apparatus 900 may be a first communication apparatus or a component that may be disposed in the first communication apparatus. The transceiver module 901 is configured to perform a receiving-related operation on a side of the first communication apparatus in the foregoing method embodiments, and the processing module 902 is configured to perform a processing-related operation on a side of the first communication apparatus in the foregoing method embodiments.

Optionally, the transceiver module 901 may include a sending module and a receiving module. The sending module is configured to perform the sending operation of the first communication apparatus in the foregoing method embodiments shown in FIG. 2A, FIG. 2B, FIG. 2C, and FIG. 8. The receiving module is configured to perform the receiving operation of the first communication apparatus in the foregoing method embodiments shown in FIG. 2A, FIG. 2B, FIG. 2C, and FIG. 8.

It should be noted that the first communication apparatus 900 may include the sending module but not include the receiving module. Alternatively, the first communication apparatus 900 may include the receiving module but not include the sending module. This may be specifically determined depending on whether the foregoing solution performed by the first communication apparatus 900 includes a sending action and a receiving action.

The processing module 902 is configured to generate a first reference signal and a first notification message.

The transceiver module 901 is configured to: send the first reference signal and the first notification message to a second communication apparatus; and receive channel characteristic information of a first channel type from the second communication apparatus.

The first channel type is a channel type corresponding to first channel state information determined by the second communication apparatus based on the first reference signal, the first notification message is used to request the channel characteristic information of the first channel type, a channel characteristic of the first channel type is from a channel characteristic library, and the channel characteristic library includes channel characteristics of one or more channel types.

In a possible implementation, the channel characteristic information of the first channel type includes the channel characteristic of the first channel type; or
the channel characteristic information of the first channel type includes an index of the first channel type; or
the channel characteristic information of the first channel type includes a channel key of the first channel type.

In another possible implementation, the channel characteristic information of the first channel type includes the index or the channel key of the first channel type, and the processing module 902 is further configured to:
obtain the channel characteristic of the first channel type from the channel characteristic library based on the index or the channel key of the first channel type.

In another possible implementation, the transceiver module 901 is further configured to:
send a download request to the second communication apparatus, where the download request is used to request to download the channel characteristic library; and
receive a first download address from the second communication apparatus.

The processing module 902 is further configured to:
download the channel characteristic library from the first download address.

In another possible implementation, the transceiver module 901 is further configured to:
send a first request, and a version number of the channel characteristic library stored in the first communication apparatus 900 to the second communication apparatus, where the first request is used to request a latest version of a channel characteristic library; and if the channel characteristic library stored in the first communication apparatus 900 is not the latest version of the channel characteristic library, receive a second download address sent by the second communication apparatus.

The processing module 902 is further configured to:
download the latest version of the channel characteristic library from the second download address.

The transceiver module 901 is further configured to:
if the channel characteristic library stored in the first communication apparatus 900 is the latest version of the channel characteristic library, receive first indication information from the second communication apparatus, where the first indication information indicates that the channel characteristic library stored in the first communication apparatus 900 is the latest version of the channel characteristic library.

In another possible implementation, the processing module 902 is further configured to:
adjust, based on the channel characteristic of the first channel type, at least one of the following parameters of the first reference signal: a sending density, a sending periodicity, a sending resource, and sending power.

In another possible implementation, the processing module 902 is further configured to:
perform channel reconstruction or channel estimation based on the channel characteristic of the first channel type.

In another possible implementation, the channel characteristic of the first channel type includes at least one of the following: a quantity of a plurality of paths, and an azimuth angle, a zenith angle, a delay, and a Doppler shift that correspond to each of the plurality of paths.

In embodiments of this application, the processing module 902 is configured to generate the first reference signal and the first notification message; and the transceiver module 901 is configured to: send the first reference signal and the first notification message to the second communication apparatus; and receive the channel characteristic information of the first channel type from the second communication apparatus. The first channel type is a channel type corresponding to first channel state information determined by the second communication apparatus based on the first reference signal, the first notification message is used to request the channel characteristic information of the first channel type, a channel characteristic of the first channel type is from a channel characteristic library, and the channel characteristic library includes channel characteristics of one or more channel types. In this way, the first communication apparatus 900 obtains the channel characteristic of the first channel type based on the channel characteristic information of the first channel type, so that the first communication apparatus 900 performs corresponding channel processing based on the channel characteristic of the first channel type, to improve communication performance. For example, the first communication apparatus 900 may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus 900 may further improve precision of channel estimation based on the channel characteristic of the first channel type, to improve communication performance.

The following describes a second communication apparatus provided in an embodiment of this application. FIG. 10 is a diagram of a structure of a second communication apparatus according to an embodiment of this application. The second communication apparatus 1000 may be configured to perform the steps performed by the second communication apparatus in the embodiments shown in FIG. 2A, FIG. 2B, FIG. 2C, and FIG. 8. For details, refer to the related descriptions in the foregoing method embodiments.

The second communication apparatus 1000 includes a transceiver module 1001 and a processing module 1002. The transceiver module 1001 may implement a corresponding communication function, and the transceiver module 1001 may also be referred to as a communication interface or a communication unit. The processing module 1002 is configured to perform a processing operation.

Optionally, the second communication apparatus 1000 may further include a storage module. The storage module may be configured to store an instruction and/or data. The processing module 1002 may read the instruction and/or the data in the storage module, so that the second communication apparatus implements the method embodiments shown in FIG. 2A, FIG. 2B, FIG. 2C, and FIG. 8.

The second communication apparatus 1000 may be configured to execute the action performed by the second communication apparatus in the foregoing method embodiments. The second communication apparatus 1000 may be a second communication apparatus or a component that may be disposed in the second communication apparatus. The transceiver module 1001 is configured to perform a receiving-related operation on a side of the second communication apparatus in the foregoing method embodiments, and the processing module 1002 is configured to perform a processing-related operation on a side of the second communication apparatus in the foregoing method embodiments.

Optionally, the transceiver module 1001 may include a sending module and a receiving module. The sending module is configured to perform the sending operation of the second communication apparatus in the foregoing method embodiments shown in FIG. 2A, FIG. 2B, FIG. 2C, and FIG. 8. The receiving module is configured to perform the receiving operation of the second communication apparatus in the foregoing method embodiments shown in FIG. 2A, FIG. 2B, FIG. 2C, and FIG. 8.

The transceiver module 1001 is configured to receive a first reference signal and a first notification message from a first communication apparatus.

The processing module 1002 is configured to: determine first channel state information based on the first notification message and the first reference signal; and determine channel characteristic information of a first channel type corresponding to the first channel state information.

The transceiver module 1001 is further configured to send the channel characteristic information of the first channel type to the first communication apparatus.

The first notification message is used to request the channel characteristic information of the first channel type, a channel characteristic of the first channel type is from a channel characteristic library, and the channel characteristic library includes channel characteristics of one or more channel types.

In a possible implementation, the channel characteristic information of the first channel type includes the channel characteristic of the first channel type; or
the channel characteristic information of the first channel type includes an index of the first channel type; or
the channel characteristic information of the first channel type includes a channel key of the first channel type.

In another possible implementation, the channel characteristic information of the first channel type includes the channel characteristic of the first channel type, and the processing module 1002 is specifically configured to:
determine, based on a first correspondence, the index or the channel key of the first channel type corresponding to the channel state information, where the first correspondence is a correspondence between channel state information and an index or a channel key of a channel type; and
obtain the channel characteristic of the first channel type from the channel characteristic library based on the index or the channel key of the first channel type.

In another possible implementation, the transceiver module 1001 is further configured to:
receive a download request from the first communication apparatus, where the download request is used to request to download the channel characteristic library; and
send a first download address to the first communication apparatus, where the first download address is used to download the channel characteristic library.

In another possible implementation, the transceiver module 1001 is further configured to:
receive, from the first communication apparatus, a first request, and a version number of the channel characteristic library stored in the first communication apparatus, where the first request is used to request a latest version of a channel characteristic library.

The processing module 1002 is further configured to:
determine whether the version number of the channel characteristic library stored in the first communication apparatus is a version number of the latest version of the signal characteristic library.

The transceiver module 1001 is further configured to:
if the version number of the channel characteristic library stored in the first communication apparatus is the version number of the latest version of the channel characteristic library, send first indication information to the first communication apparatus, where the first indication information indicates that the channel characteristic library stored in the first communication apparatus is the latest version of the channel characteristic library; or
if the version number of the channel characteristic library stored in the first communication apparatus is not the version number of the latest version of the channel characteristic library, send a second download address to the first communication apparatus, where the second download address is used to download the latest version of the channel characteristic library.

In another possible implementation, the processing module 1002 is further configured to:
obtain a plurality of pieces of historical channel state information; and
establish the channel characteristic library based on the plurality of pieces of historical channel state information.

In another possible implementation, the processing module 1002 is specifically configured to:
determine a channel characteristic set corresponding to each of the plurality of pieces of historical channel state information, where the channel characteristic set includes one or more channel characteristics;
classify the plurality of pieces of historical channel state information based on the channel characteristic set corresponding to each piece of historical channel state information, to obtain historical channel state information corresponding to each of a plurality of channel types; and
determine, based on the historical channel state information corresponding to each of the plurality of channel types, a channel characteristic corresponding to each of the plurality of channel types.

In another possible implementation, the channel characteristic set corresponding to each piece of channel state information includes at least one of the following: a quantity of a plurality of paths, and an azimuth angle, a zenith angle, a delay, and a Doppler shift that correspond to each of the plurality of paths.

In another possible implementation, the transceiver module 1001 is further configured to:
receive a second reference signal and a second notification message from a third communication apparatus.

The processing module 1002 is further configured to:
determine first channel state information based on the second notification message and the second reference signal; and
determine channel characteristic information of a second channel type corresponding to the second channel state information.

The transceiver module 1001 is further configured to:
send the channel characteristic information of the second channel type to the third communication apparatus.

The second notification message is used to request the channel characteristic information of the second channel type, and a channel characteristic of the second channel type is from the channel characteristic library.

In another possible implementation, the processing module 1002 is further configured to:
allocate a reference signal pilot sequence to each of the first communication apparatus and the third communication apparatus based on the channel characteristic of the first channel type and the channel characteristic of the second channel type.

In embodiments of this application, the transceiver module 1001 is configured to receive the first reference signal and the first notification message from the first communication apparatus; the processing module 1002 is configured to: determine the first channel state information based on the first notification message and the first reference signal; and determine the channel characteristic information of the first channel type corresponding to the first channel state information; and the transceiver module 1001 is further configured to send the channel characteristic information of the first channel type to the first communication apparatus. The first notification message is used to request the channel characteristic information of the first channel type, the channel characteristic of the first channel type is from the channel characteristic library, and the channel characteristic library includes the channel characteristics of the one or more channel types. It can be learned that the transceiver module 1001 may provide the channel characteristic information of the first channel type for the first communication apparatus, so that the first communication apparatus obtains the channel characteristic of the first channel type, and the first communication apparatus performs corresponding channel processing based on the channel characteristic of the first channel type, to improve communication performance. For example, the first communication apparatus may perform channel reconstruction, estimation, or the like based on the channel characteristic of the first channel type, and then perform uplink precoding based on a reconstructed channel or an estimated channel, to improve uplink transmission efficiency. Alternatively, for example, the first communication apparatus may further improve precision of channel estimation based on the channel characteristic of the first channel type, to improve communication performance.

FIG. 11 is a diagram of another structure of a first communication apparatus according to an embodiment of this application. Refer to FIG. 11. The first communication apparatus 1100 includes an input/output interface 1101 and a logic circuit 1102.

The first communication apparatus 1100 shown in FIG. 11 may be configured to perform the steps performed by the first communication apparatus in the embodiments shown in FIG. 2A, FIG. 2B, FIG. 2C, and FIG. 8.

Optionally, the logic circuit 1102 may have a function of the processing module 902 in the embodiment shown in FIG. 9. The input/output interface 1101 may have a function of the transceiver module 901 in the embodiment shown in FIG. 9.

The first communication apparatus 1100 shown in FIG. 11 may perform the technical solutions illustrated in the foregoing method embodiments. An implementation principle and beneficial effects thereof are similar to those of the foregoing method embodiments, and details are not described herein again.

FIG. 12 is a diagram of another structure of a second communication apparatus according to an embodiment of this application. Refer to FIG. 12. The second communication apparatus 1200 includes an input/output interface 1201 and a logic circuit 1202.

The second communication apparatus 1200 shown in FIG. 12 may be configured to perform the steps performed by the second communication apparatus in the embodiments shown in FIG. 2A, FIG. 2B, FIG. 2C, and FIG. 8.

Optionally, the logic circuit 1202 may have a function of the processing module 1002 in the embodiment shown in FIG. 10. The input/output interface 1201 may have a function of the transceiver module 1001 in the embodiment shown in FIG. 10.

The second communication apparatus 1200 shown in FIG. 12 may perform the technical solutions illustrated in the foregoing method embodiments. An implementation principle and beneficial effects thereof are similar to those of the foregoing method embodiments, and details are not described herein again.

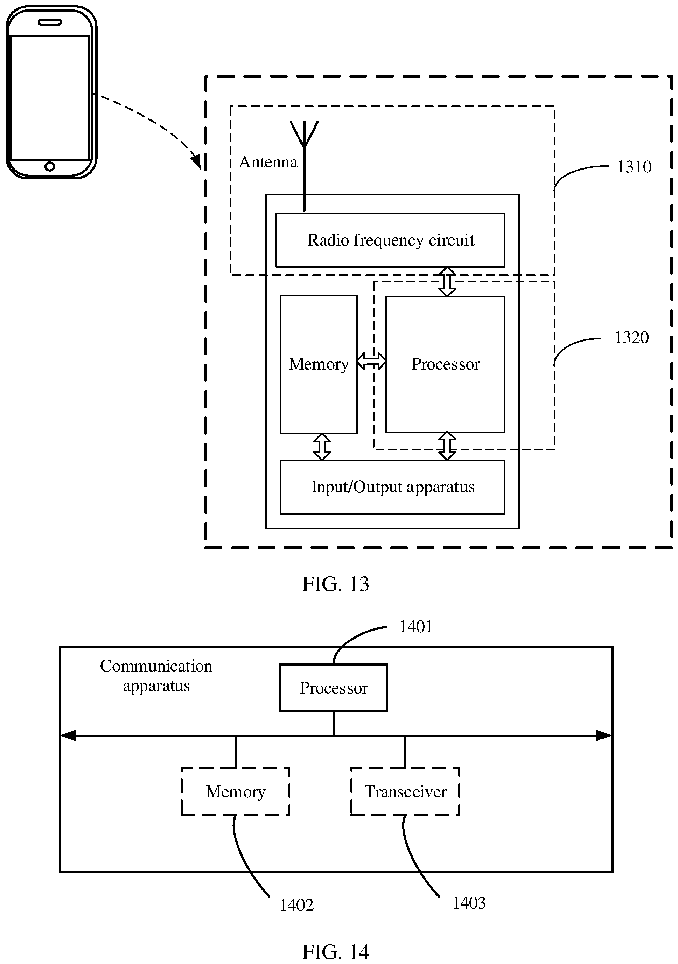

The following shows a possible structure diagram of a terminal device with reference to FIG. 13.

FIG. 13 is a simplified structure diagram of a terminal device. For ease of understanding and convenience of illustration, in FIG. 13, an example in which the terminal device is a mobile phone is used. As shown in FIG. 13, the terminal device includes a processor, a memory, a radio frequency circuit, an antenna, and an input/output apparatus.

The processor is mainly configured to process a communication protocol and communication data, control the terminal device, execute a software program, process data of the software program, and the like.

The memory is mainly configured to store a software program and data.

The radio frequency circuit is mainly configured to perform conversion between a baseband signal and a radio frequency signal, and process the radio frequency signal.

The antenna is mainly configured to receive and send a radio frequency signal in a form of an electromagnetic wave.

The input/output apparatus, such as a touchscreen, a display, or a keyboard, is mainly configured to receive data input by a user and output data to the user.

It should be noted that terminal devices of some types may have no input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 13. In an actual terminal device product, there may be one or more processors and one or more memories. The memory may also be referred to as a storage medium, a storage device, or the like. The memory may be deployed independent of the processor, or may be integrated with the processor. This is not limited in embodiments of this application.

In embodiments of this application, the antenna and the radio frequency circuit that have sending and receiving functions may be considered as a transceiver module of the terminal device, and the processor that has a processing function may be considered as a processing module of the terminal device. As shown in FIG. 13, the terminal device includes a transceiver module 1310 and a processing module 1320. The transceiver module may also be referred to as a transceiver, a transceiver machine, a transceiver apparatus, or the like. The processing module may also be referred to as a processor, a processing board, a processing module, a processing apparatus, or the like.

Optionally, a component for implementing a receiving function in the transceiver module 1310 may be considered as a receiving module, and a component for implementing a sending function in the transceiver module 1310 may be considered as a sending module. That is, the transceiver module 1310 includes the receiving module and the sending module. The transceiver module may also be sometimes referred to as a transceiver machine, a transceiver, a transceiver circuit, or the like. The receiving module may also be sometimes referred to as a receiver machine, a receiver, a receiver circuit, or the like. The sending module may also be sometimes referred to as a transmitter machine, a transmitter, a transmitter circuit, or the like.

It should be understood that the transceiver module 1310 is configured to perform the sending and receiving operations of the first communication apparatus, the second communication apparatus, or the third communication apparatus in the foregoing method embodiments, and the processing module 1320 is configured to perform other operations other than the sending and receiving operations of the first communication apparatus, the second communication apparatus, or the third communication apparatus in the foregoing method embodiments.

When the terminal device is a chip, the chip includes a transceiver module and a processing module. The transceiver module may be an input/output circuit or a communication interface; and the processing module is a processor, a microprocessor, an integrated circuit, or a logic circuit integrated on the chip.

This application further provides a communication apparatus. FIG. 14 is a diagram of another structure of a communication apparatus according to an embodiment of this application. The communication apparatus may be configured to perform the steps performed by the first communication apparatus or the second communication apparatus in the embodiments shown in FIG. 2A, FIG. 2B, FIG. 2C, and FIG. 8. For details, refer to the related descriptions in the foregoing method embodiments.

The communication apparatus includes a processor 1401. Optionally, the communication apparatus further includes a memory 1402. Optionally, the communication apparatus further includes a transceiver 1403.

In a possible implementation, the processor 1401, the memory 1402, and the transceiver 1403 are connected to each other through a bus, and the memory stores computer instructions.

The processing module 1002 in the foregoing embodiment may be specifically the processor 1401 in this embodiment. Therefore, a specific implementation of the processor 1401 is not described again. The transceiver module 1001 in the foregoing embodiment may be specifically the transceiver 1403 in this embodiment. Therefore, a specific implementation of the transceiver 1403 is not described again.

An embodiment of this application further provides a communication system. The communication system includes the first communication apparatus shown in FIG. 9 and the second communication apparatus shown in FIG. 10.

The first communication apparatus shown in FIG. 9 may be configured to perform all or some of the steps performed by the first communication apparatus in the embodiments shown in FIG. 2A, FIG. 2B, FIG. 2C, and FIG. 8.

The second communication apparatus shown in FIG. 10 may be configured to perform all or some of the steps performed by the second communication apparatus in the embodiments shown in FIG. 2A, FIG. 2B, FIG. 2C, and FIG. 8.

An embodiment of this application further provides a chip apparatus including a processor. The processor is configured to invoke a computer program or computer instructions stored in a memory, so that the processor performs the methods in the embodiments shown in FIG. 2A, FIG. 2B, FIG. 2C, and FIG. 8.

In a possible implementation, an input of the chip apparatus corresponds to the receiving operation in the embodiments shown in FIG. 2A, FIG. 2B, FIG. 2C, and FIG. 8, and an output of the chip apparatus corresponds to the sending operation in the embodiments shown in FIG. 2A, FIG. 2B, FIG. 2C, and FIG. 8.

Optionally, the processor is coupled to the memory through an interface, or the processor is integrated with the memory.

Optionally, the chip apparatus further includes the memory, and the memory stores the computer program or the computer instructions.

The processor mentioned in any of the foregoing may be a general central processing unit, a microprocessor, an application-specific integrated circuit (application-specific integrated circuit, ASIC), or one or more integrated circuits configured to control program execution of the methods in the embodiments shown in FIG. 2A, FIG. 2B, FIG. 2C, and FIG. 8. The memory mentioned in any of the foregoing may be a read-only memory (read-only memory, ROM), another type of static storage device capable of storing static information and instructions, a random access memory (random access memory, RAM), or the like.

It may be clearly understood by a person skilled in the art that, for convenient and brief description, for explanations and beneficial effects of related content in any one of the communication apparatuses provided above, refer to the corresponding method embodiments provided above. Details are not described herein again.

It may be clearly understood by a person skilled in the art that, for convenient and brief description, for a detailed working process of the system, apparatus, and module described above, refer to the corresponding process in the foregoing method embodiments. Details are not described herein again.

In several embodiments provided in this application, it should be understood that the disclosed system, apparatus, and method may be implemented in other manners. For example, the apparatus embodiment described above is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electrical, mechanical, or other forms.

The modules described as separate parts may or may not be physically separate, and parts displayed as modules may or may not be physical modules, that is, may be located at one position, or may be distributed on a plurality of network modules. Some or all of the modules may be selected according to an actual requirement to achieve the objectives of the solutions of the embodiments.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or a part contributing to the conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The storage medium includes any medium that can store program code, such as a USB flash drive, a removable hard disk, a read-only memory, a random access memory, a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A channel characteristic obtaining method, wherein the method comprises:
generating, by a first communication apparatus, a first reference signal and a first notification message;
sending, by the first communication apparatus, the first reference signal and the first notification message to a second communication apparatus; and
receiving, by the first communication apparatus, channel characteristic information of a first channel type from the second communication apparatus, wherein
the first channel type is a channel type corresponding to first channel state information CSI determined by the second communication apparatus based on the first reference signal, the first notification message is used to request the channel characteristic information of the first channel type, a channel characteristic of the first channel type is from a channel characteristic library, and the channel characteristic library comprises channel characteristics of one or more channel types.

2. The method according to claim 1, wherein the channel characteristic information of the first channel type comprises the channel characteristic of the first channel type; or
the channel characteristic information of the first channel type comprises an index of the first channel type; or
the channel characteristic information of the first channel type comprises a channel key of the first channel type.

3. The method according to claim 1 or 2, wherein the channel characteristic information of the first channel type comprises the index or the channel key of the first channel type, and the method further comprises:
obtaining, by the first communication apparatus, the channel characteristic of the first channel type from the channel characteristic library based on the index or the channel key of the first channel type.

4. The method according to any one of claims 1 to 3, wherein the method further comprises:
sending, by the first communication apparatus, a download request to the second communication apparatus, wherein the download request is used to request to download the channel characteristic library;
receiving, by the first communication apparatus, a first download address from the second communication apparatus; and
downloading, by the first communication apparatus, the channel characteristic library from the first download address.

5. The method according to any one of claims 1 to 4, wherein the method further comprises:
sending, by the first communication apparatus to the second communication apparatus, a first request, and a version number of the channel characteristic library stored in the first communication apparatus, wherein the first request is used to request a latest version of a channel characteristic library; and
if the channel characteristic library stored in the first communication apparatus is not the latest version of the channel characteristic library, receiving, by the first communication apparatus, a second download address sent by the second communication apparatus, and downloading the latest version of the channel characteristic library from the second download address; or
if the channel characteristic library stored in the first communication apparatus is the latest version of the channel characteristic library, receiving, by the first communication apparatus, first indication information from the second communication apparatus, wherein the first indication information indicates that the channel characteristic library stored in the first communication apparatus is the latest version of the channel characteristic library.

6. The method according to any one of claims 1 to 5, wherein the method further comprises:
adjusting, by the first communication apparatus based on the channel characteristic of the first channel type, at least one of the following parameters of the first reference signal: a sending density, a sending periodicity, a sending resource, and sending power.

7. The method according to any one of claims 1 to 6, wherein the method further comprises:
performing, by the first communication apparatus, channel reconstruction or channel estimation based on the channel characteristic of the first channel type.

8. The method according to any one of claims 1 to 7, wherein the channel characteristic of the first channel type comprises at least one of the following: a quantity of a plurality of paths, and an azimuth angle, a zenith angle, a delay, and a Doppler shift that correspond to each of the plurality of paths.

9. A channel characteristic obtaining method, wherein the method comprises:
receiving, by a second communication apparatus, a first reference signal and a first notification message from a first communication apparatus;
determining, by the second communication apparatus, first channel state information CSI based on the first notification message and the first reference signal;
determining, by the second communication apparatus, channel characteristic information of a first channel type corresponding to the first channel state information; and
sending, by the second communication apparatus, the channel characteristic information of the first channel type to the first communication apparatus, wherein
the first notification message is used to request the channel characteristic information of the first channel type, a channel characteristic of the first channel type is from a channel characteristic library, and the channel characteristic library comprises channel characteristics of one or more channel types.

10. The method according to claim 9, wherein the channel characteristic information of the first channel type comprises the channel characteristic of the first channel type; or
the channel characteristic information of the first channel type comprises an index of the first channel type; or
the channel characteristic information of the first channel type comprises a channel key of the first channel type.

11. The method according to claim 9 or 10, wherein the channel characteristic information of the first channel type comprises the channel characteristic of the first channel type, and the determining, by the second communication apparatus, channel characteristic information of a first channel type corresponding to the channel state information comprises:
determining, by the second communication apparatus based on a first correspondence, the index or the channel key of the first channel type corresponding to the channel state information, wherein the first correspondence is a correspondence between channel state information and an index or a channel key of a channel type; and
obtaining, by the second communication apparatus, the channel characteristic of the first channel type from the channel characteristic library based on the index or the channel key of the first channel type.

12. The method according to any one of claims 9 to 11, wherein the method further comprises:
receiving, by the second communication apparatus, a download request from the first communication apparatus, wherein the download request is used to request to download the channel characteristic library; and
sending, by the second communication apparatus, a first download address to the first communication apparatus, wherein the first download address is used to download the channel characteristic library.

13. The method according to any one of claims 9 to 12, wherein the method further comprises:
receiving, by the second communication apparatus from the first communication apparatus, a first request, and a version number of the channel characteristic library stored in the first communication apparatus, wherein the first request is used to request a latest version of a channel characteristic library;
determining, by the second communication apparatus, whether the version number of the channel characteristic library stored in the first communication apparatus is a version number of the latest version of the signal characteristic library; and
if the version number of the channel characteristic library stored in the first communication apparatus is the version number of the latest version of the channel characteristic library, sending, by the second communication apparatus, first indication information to the first communication apparatus, wherein the first indication information indicates that the channel characteristic library stored in the first communication apparatus is the latest version of the channel characteristic library; or
if the version number of the channel characteristic library stored in the first communication apparatus is not the version number of the latest version of the channel characteristic library, sending, by the second communication apparatus, a second download address to the first communication apparatus, wherein the second download address is used to download the latest version of the channel characteristic library.

14. The method according to any one of claims 9 to 13, wherein the method further comprises:
obtaining, by the second communication apparatus, a plurality of pieces of historical channel state information CSI; and
establishing, by the second communication apparatus, the channel characteristic library based on the plurality of pieces of historical channel state information.

15. The method according to claim 14, wherein the establishing, by the second communication apparatus, the channel characteristic library based on the plurality of pieces of historical channel state information comprises:
determining, by the second communication apparatus, a channel characteristic set corresponding to each of the plurality of pieces of historical channel state information, wherein the channel characteristic set comprises one or more channel characteristics;
classifying, by the second communication apparatus, the plurality of pieces of historical channel state information based on the channel characteristic set corresponding to each piece of historical channel state information, to obtain historical channel state information corresponding to each of a plurality of channel types; and
determining, by the second communication apparatus based on the historical channel state information corresponding to each of the plurality of channel types, a channel characteristic corresponding to each of the plurality of channel types.

16. The method according to claim 15, wherein the channel characteristic set corresponding to each piece of channel state information comprises at least one of the following: a quantity of a plurality of paths, and an azimuth angle, a zenith angle, a delay, and a Doppler shift that correspond to each of the plurality of paths.

17. The method according to any one of claims 9 to 16, wherein the method further comprises:
receiving, by the second communication apparatus, a second reference signal and a second notification message from the third communication apparatus;
determining, by the second communication apparatus, first channel state information based on the second notification message and the second reference signal;
determining, by the second communication apparatus, channel characteristic information of a second channel type corresponding to the second channel state information; and
sending, by the second communication apparatus, the channel characteristic information of the second channel type to the third communication apparatus, wherein
the second notification message is used to request the channel characteristic information of the second channel type, and a channel characteristic of the second channel type is from the channel characteristic library.

18. The method according to claim 17, wherein the method further comprises:
allocating, by the second communication apparatus, a reference signal pilot sequence to each of the first communication apparatus and the third communication apparatus based on the channel characteristic of the first channel type and the channel characteristic of the second channel type.

19. A first communication apparatus, wherein the first communication apparatus comprises:
a processing module, configured to generate a first reference signal and a first notification message; and
a transceiver module, configured to: send the first reference signal and the first notification message to a second communication apparatus; and receive channel characteristic information of a first channel type from the second communication apparatus, wherein
the first channel type is a channel type corresponding to first channel state information CSI determined by the second communication apparatus based on the first reference signal, the first notification message is used to request the channel characteristic information of the first channel type, a channel characteristic of the first channel type is from a channel characteristic library, and the channel characteristic library comprises channel characteristics of one or more channel types.

20. The first communication apparatus according to claim 19, wherein the channel characteristic information of the first channel type comprises the channel characteristic of the first channel type; or
the channel characteristic information of the first channel type comprises an index of the first channel type; or
the channel characteristic information of the first channel type comprises a channel key of the first channel type.

21. The first communication apparatus according to claim 19 or 20, wherein the channel characteristic information of the first channel type comprises the index or the channel key of the first channel type, and the processing module is further configured to:
obtain the channel characteristic of the first channel type from the channel characteristic library based on the index or the channel key of the first channel type.

22. The first communication apparatus according to any one of claims 19 to 21, wherein the transceiver module is further configured to:
send a download request to the second communication apparatus, wherein the download request is used to request to download the channel characteristic library; and
receive a first download address from the second communication apparatus; and
the processing module is further configured to:
download the channel characteristic library from the first download address.

23. The first communication apparatus according to any one of claims 19 to 22, wherein the transceiver module is further configured to:
send a first request, and a version number of the channel characteristic library stored in the first communication apparatus to the second communication apparatus, wherein the first request is used to request a latest version of a channel characteristic library; and if the channel characteristic library stored in the first communication apparatus is not the latest version of the channel characteristic library, receive a second download address sent by the second communication apparatus;
the processing module is configured to download the latest version of the channel characteristic library from the second download address; and
the transceiver module is further configured to:
if the channel characteristic library stored in the first communication apparatus is the latest version of the channel characteristic library, receive first indication information from the second communication apparatus, wherein the first indication information indicates that the channel characteristic library stored in the first communication apparatus is the latest version of the channel characteristic library.

24. The first communication apparatus according to any one of claims 19 to 23, wherein the processing module is further configured to:
adjust, based on the channel characteristic of the first channel type, at least one of the following parameters of the first reference signal: a sending density, a sending periodicity, a sending resource, and sending power.

25. The first communication apparatus according to any one of claims 19 to 24, wherein the processing module is further configured to:
perform channel reconstruction or channel estimation based on the channel characteristic of the first channel type.

26. The first communication apparatus according to any one of claims 19 to 25, wherein the channel characteristic of the first channel type comprises at least one of the following: a quantity of a plurality of paths, and an azimuth angle, a zenith angle, a delay, and a Doppler shift that correspond to each of the plurality of paths.

27. A second communication apparatus, wherein the second communication apparatus comprises:
a transceiver module, configured to receive a first reference signal and a first notification message from a first communication apparatus; and
a processing module, configured to: determine first channel state information CSI based on the first notification message and the first reference signal; and determine channel characteristic information of a first channel type corresponding to the first channel state information, wherein
the transceiver module is further configured to send the channel characteristic information of the first channel type to the first communication apparatus; and
the first notification message is used to request the channel characteristic information of the first channel type, a channel characteristic of the first channel type is from a channel characteristic library, and the channel characteristic library comprises channel characteristics of one or more channel types.

28. The second communication apparatus according to claim 27, wherein the channel characteristic information of the first channel type comprises the channel characteristic of the first channel type; or
the channel characteristic information of the first channel type comprises an index of the first channel type; or
the channel characteristic information of the first channel type comprises a channel key of the first channel type.

29. The second communication apparatus according to claim 27 or 28, wherein the channel characteristic information of the first channel type comprises the channel characteristic of the first channel type, and the processing module is specifically configured to:
determine, based on a first correspondence, the index or the channel key of the first channel type corresponding to the channel state information, wherein the first correspondence is a correspondence between channel state information and an index or a channel key of a channel type; and
obtain the channel characteristic of the first channel type from the channel characteristic library based on the index or the channel key of the first channel type.

30. The second communication apparatus according to any one of claims 27 to 29, wherein the transceiver module is further configured to:
receive a download request from the first communication apparatus, wherein the download request is used to request to download the channel characteristic library; and
send a first download address to the first communication apparatus, wherein the first download address is used to download the channel characteristic library.

31. The second communication apparatus according to any one of claims 27 to 30, wherein the transceiver module is further configured to:
receive, from the first communication apparatus, a first request, and a version number of the channel characteristic library stored in the first communication apparatus, wherein the first request is used to request a latest version of a channel characteristic library;
the processing module is further configured to:
determine whether the version number of the channel characteristic library stored in the first communication apparatus is a version number of the latest version of the signal characteristic library; and
the transceiver module is further configured to:
if the version number of the channel characteristic library stored in the first communication apparatus is the version number of the latest version of the channel characteristic library, send first indication information to the first communication apparatus, wherein the first indication information indicates that the channel characteristic library stored in the first communication apparatus is the latest version of the channel characteristic library; or
if the version number of the channel characteristic library stored in the first communication apparatus is not the version number of the latest version of the channel characteristic library, send a second download address to the first communication apparatus, wherein the second download address is used to download the latest version of the channel characteristic library.

32. The second communication apparatus according to any one of claims 27 to 31, wherein the processing module is further configured to:
obtain a plurality of pieces of historical channel state information CSI; and
establish the channel characteristic library based on the plurality of pieces of historical channel state information.

33. The second communication apparatus according to claim 32, wherein the processing module is specifically configured to:
determine a channel characteristic set corresponding to each of the plurality of pieces of historical channel state information, wherein the channel characteristic set comprises one or more channel characteristics;
classify the plurality of pieces of historical channel state information based on the channel characteristic set corresponding to each piece of historical channel state information, to obtain historical channel state information corresponding to each of a plurality of channel types; and
determine, based on the historical channel state information corresponding to each of the plurality of channel types, a channel characteristic corresponding to each of the plurality of channel types.

34. The second communication apparatus according to claim 33, wherein the channel characteristic set corresponding to each piece of channel state information comprises at least one of the following: a quantity of a plurality of paths, and an azimuth angle, a zenith angle, a delay, and a Doppler shift that correspond to each of the plurality of paths.

35. The second communication apparatus according to any one of claims 27 to 34, wherein the transceiver module is further configured to:
receive a second reference signal and a second notification message from the third communication apparatus;
the processing module is further configured to:
determine first channel state information based on the second notification message and the second reference signal; and
determine channel characteristic information of a second channel type corresponding to the second channel state information; and
the transceiver module is further configured to:
send the channel characteristic information of the second channel type to the third communication apparatus, wherein
the second notification message is used to request the channel characteristic information of the second channel type, and a channel characteristic of the second channel type is from the channel characteristic library.

36. The second communication apparatus according to claim 35, wherein the processing module is further configured to:
allocate a reference signal pilot sequence to each of the first communication apparatus and the third communication apparatus based on the channel characteristic of the first channel type and the channel characteristic of the second channel type.

37. A communication apparatus, wherein the communication apparatus comprises an input/output interface and a logic circuit, wherein
the input/output interface is configured to perform an input or output operation of the method according to any one of claims 1 to 8, and the logic circuit is configured to perform the processing operation according to any one of claims 1 to 8; or
the input/output interface is configured to perform an input or output operation of the method according to any one of claims 9 to 18, and the logic circuit is configured to perform the processing operation according to any one of claims 9 to 18.

38. A communication apparatus, wherein the communication apparatus comprises a processor, wherein
the processor is configured to execute a computer program or computer instructions in a memory, to perform the method according to any one of claims 1 to 8, or to perform the method according to any one of claims 9 to 18.

39. The communication apparatus according to claim 38, wherein the communication apparatus further comprises the memory.

40. A computer-readable storage medium, wherein the computer-readable storage medium stores a computer program, and when the computer program is executed by a communication apparatus, the communication apparatus is enabled to perform the method according to any one of claims 1 to 8, or the communication apparatus is enabled to perform the method according to any one of claims 9 to 18.

41. A communication system, comprising a first communication apparatus and a second communication apparatus, wherein the first communication apparatus is configured to perform the method according to any one of claims 1 to 8, and the second communication apparatus is configured to perform the method according to any one of claims 9 to 16.
